(19) Europäisches Patentamt
European Patent Office
Office européen des brevets

(11) **EP 4 002 676 B1**

(12) **EUROPÄISCHE PATENTSCHRIFT**

(45) Veröffentlichungstag und Bekanntmachung des Hinweises auf die Patenterteilung:
**21.02.2024 Patentblatt 2024/08**

(21) Anmeldenummer: **20208065.1**

(22) Anmeldetag: **17.11.2020**

(51) Internationale Patentklassifikation (IPC):
**H02P 1/28** (2006.01)

(52) Gemeinsame Patentklassifikation (CPC):
**H02P 1/28**

(54) **VERFAHREN ZUM BETREIBEN EINES DREHSTROMMOTORS**

METHOD FOR OPERATING A THREE-PHASE MOTOR

PROCÉDÉ DE FONCTIONNEMENT D'UN MOTEUR TRIPHASÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.05.2022 Patentblatt 2022/21**

(73) Patentinhaber: **Siemens Aktiengesellschaft**
**80333 München (DE)**

(72) Erfinder:
• **Nannen, Hauke**
**90443 Nürnberg (DE)**
• **Zatocil, Heiko**
**90469 Nürnberg (DE)**

(74) Vertreter: **Siemens Patent Attorneys**
**Postfach 22 16 34**
**80506 München (DE)**

(56) Entgegenhaltungen:
EP-A1- 0 379 608    EP-A1- 2 499 736
EP-A1- 3 557 760    EP-A1- 3 629 468
EP-A1- 3 916 998    WO-A1-01/48908
US-A1- 2009 058 341

• NANNEN HAUKE ET AL: "Novel Predictive Start-up Algorithm for Soft Starter Driven Induction Motors", IECON 2020 THE 46TH ANNUAL CONFERENCE OF THE IEEE INDUSTRIAL ELECTRONICS SOCIETY, IEEE, 18. Oktober 2020 (2020-10-18), Seiten 3071-3078, XP033860020, DOI: 10.1109/IECON43393.2020.9254482 [gefunden am 2020-11-10]

EP 4 002 676 B1

**Beschreibung**

Die Erfindung betrifft ein Verfahren zum Betreiben eines Drehstrommotors. Ebenso betrifft die Erfindung einen Sanftstarter. Gleichermaßen betrifft die Erfindung ein Computerprogrammprodukt, mit dem das Verfahren durchführbar ist.

In der unter der Nummer EP3916998A1 veröffentlichten europäischen Patentanmeldung EP20176295.2 mit dem Anmeldetag 25.05.2020, welche unter Artikel 54 (3) EPÜ fällt, sowie in dem im Folgenden als "Nannen et al." referenzierten Konferenzpaper Nannen, Hauke; Zatocil, Heiko; Griepentrog, Gerd: Novel predictive start-up algorithm for soft starter driven induction motors, IECON 2020, 46th Annual Conference of the IEEE Industrial Electronics Society (IES), 18-21 October 2020, Singapore, wird ein modellprädikatives Ansteuerverfahren für Asynchronmaschinen am Sanftstarter beschrieben, mit dem Motor- und Thyristorverluste gesenkt werden können. Ausgehend von gemessenen und/oder berechneten Zustandsgrößen wie Netzspannung, Netzfrequenz, Rotorgeschwindigkeit und Rotorfluss erfolgt mittels einer Echtzeitsimulation eine Prädiktion von Strom- und Drehmomentverläufen für alle möglichen Thyristorzündkombinationen. Diese Verläufe werden anhand von Entscheidungskriterien bewertet, um nutzbare Zündmöglichkeiten zu identifizieren. Ein Nachteil dieses Verfahrens ist, dass das Prädizieren des Motorverhaltens in Echtzeit eine hohe Rechenleistung erfordert; dies führt zu deutlichen Mehrkosten für den Prozessor oder Microcontroller.

US2009/058341A1 (Lu et al. ; Rockwell Automation Technologies, Inc.) 5. März 2009 beschreibt eine Motorantriebschaltung für einen Drehstrommotor, umfassend eine Steuerung, einen Netzspannungszyklusüberwachungseinrichtung und einen Flussbeobachter, wobei die Steuerung zur Erzeugung von Thyristoransteuersignalen Spannungssignale von Netzspannungssensoren und Motorspannungssignale von Motorspannungssensoren heranzieht.

Die vorliegende Erfindung wurde vor dem Hintergrund des vorstehend beschriebenen Stands der Technik gemacht, wobei es Aufgabe der vorliegenden Erfindung war, ein Verfahren zu definieren, das auf der einen Seite ein ähnliches Betriebsverhalten wie der modellprädiktive Ansatz bietet, auf der anderen Seite jedoch keine so hohe Rechenleistung erfordert.

Die Aufgabe wird durch ein Verfahren gemäß Anspruch 1 gelöst. Dabei handelt es sich um ein Verfahren, welches zum Betreiben eines Drehstrommotors an einem mehrphasigen elektrischen Netz dient. Das Betreiben erfolgt mithilfe von einem Sanftstarter, mit dem eine oder mehr Netzphasen des Netzes jeweils durch Zündung von Thyristoren schaltbar sind. Das Betriebsverfahren berücksichtigt neben mindestens einem netzbezogenen Zündkriterium zusätzlich mindestens ein rotorflussbezogenes Zündkriterium.

Die Erfindung basiert auf der Idee, dass eine Entscheidung, eine Zündung eines Thyristors vorzunehmen, mit Bezug auf ein netzbezogenes Zündkriterium, z. B. die Lage des Spannungsvektors, und ein rotorflussbezogenes Zündkriterium, z. B. die Lage des Rotorflussvektors, getroffen wird. In dieser Hinsicht unterscheidet sich das erfindungsgemäße Ansteuerverfahren grundsätzlich von herkömmlichen Ansteuerverfahren, bei denen der in der Drehstrommaschine generierte Rotorfluss keinen Einfluss auf eine Entscheidung hat, ob eine Thyristorzündung vorgenommen werden soll.

Das vorgestellte Verfahren benötigt keine detaillierten Motorparameter oder Prädiktionen, sondern ausschließlich einige Winkeloperationen und Vergleiche und ist somit um ein Vielfaches einfacher in einem industriellen Produkt zu implementieren als das bekannte modellprädikatives Ansteuerverfahren. Erste Abschätzungen ergaben, dass das erfindungsgemäße Verfahren nur ca. 10 % der Rechenleistung des modellprädikatives Ansteuerverfahren benötigt. Außerdem ist mit dem neuen Verfahren sogar ein geregelter Betrieb möglich.

Gemäß der Erfindung muss für eine Zündentscheidung, dass eine Zündmöglichkeit eines oder mehrerer Thyristoren genutzt wird, sowohl das netzbezogene Zündkriterium als auch das rotorflussbezogene Zündkriterium erfüllt sein. Jede Zündmöglichkeit wird daraufhin geprüft, ob sie sowohl das netzbezogene Zündkriterium als auch das rotorflussbezogene Zündkriterium erfüllt. Nur in dem Fall, dass eine Zündmöglichkeit sowohl das netzbezogene Zündkriterium als auch das rotorflussbezogene Zündkriterium erfüllt, kann die Zündmöglichkeit durch eine Zündung tatsächlich genutzt werden.

Gemäß der Erfindung ist das netzbezogene Zündkriterium erfüllt, wenn eine Zündmöglichkeit von zwei oder mehr Netzphasen innerhalb eines Zündwinkelbereichs liegt, der durch eine untere Zündwinkelbereichsgrenze und eine obere Zündwinkelbereichsgrenze in Bezug auf eine Netzgröße definiert ist, wobei die Netzgröße die Netzspannung und/oder der Netzstrom ist. Die untere Zündwinkelbereichsgrenze bestimmt die Zündung, bei der der Stromfluss die maximale Länge und die größte Stromamplitude erreicht. Die untere Zündwinkelbereichsgrenze kann analog zum Zünd-winkel $\alpha$ bei den klassischen Ansteuerverfahren z. B. über eine Kennlinie vorgegeben werden oder unter Berücksichtigung der Stromamplitude geregelt werden. Auch eine Berücksichtigung der aktuellen Rotorflussamplitude zur Begrenzung des maximal möglichen Drehmoments ist möglich. Da mittels der unteren Zündwinkelbereichsgrenze der Strom und das Drehmoment gesteuert werden kann, ist die Funktion der unteren Zündwinkelbereichsgrenze ähnlich zu der des Zündwinkels $\alpha$ in herkömmlichen Ansteuerverfahren. Die untere Zündwinkelbereichsgrenze kann einen Wert aus dem folgenden Definitionsbereich annehmen: [-90°; obere Zündwinkelbereichsgrenze], gemessen in Bezug auf den Vektor der Netzspannung. Die obere Zündwinkelbereichsgrenze definiert indirekt den kürzesten Stromfluss, welcher durch eine Zündung ausgelöst werden kann. Die obere Zündwinkelbereichsgrenze kann so gewählt werden, dass auch bei einem Netz, in dem die Nulldurchgangsbestimmung schwierig ist, sichergestellt ist, dass die Zündung sich immer so verhält, dass der Strom in die gewollte Richtung fließt und es nicht zu einer ungewollten Zündung mit viel zu hoher Stromamplitude kommt.

Gemäß einer bevorzugten Ausgestaltung der Erfindung ist das rotorflussbezogene Zündkriterium erfüllt, wenn eine Zündmöglichkeit von zwei oder mehr Netzphasen innerhalb eines Fluss- und Drehmomentwinkelbereichs liegt, dessen Bereichsgrenzwerte in Bezug auf den Rotorfluss definiert sind. Durch die Wahl eines der Bereichsgrenzwerte des Fluss- und Drehmomentwinkelbereichs können Bereiche voneinander getrennt werden, in denen die Zündungen im Mittel ein positives und ein negatives Drehmoment hervorrufen. Je nach Wahl dieses Bereichsgrenzwerts wird z. B. ein leicht negatives Drehmoment zugelassen, zugunsten eines stark rotorflussbildenden Stroms. Mit dem anderen Bereichsgrenzwert des Fluss- und Drehmomentwinkelbereichs kann definiert werden, wieviel positives Drehmoment und wieviel Rotorflussverkettung im Rotor generiert wird: es kann sein, dass ein Aufbau von positivem Drehmoment zu einem Abbau von Rotorfluss führt und umgekehrt. Die Wahl dieses anderen Bereichsgrenzwerts ist also genau zu prüfen. Dieser Parameter kann zur "Flussführung" oder "Flussregelung" während des Hochlaufs genutzt werden. Mittels dieses Grenzwerts kann also der mittlere absolute Rotorfluss $|\vec{\Psi}_2^S|$ beeinflusst werden. Falls der Motor beschleunigt werden soll, kann die Differenz der Bereichsgrenzwerte des Fluss- und Drehmomentwinkelbereichs einen Wert aus dem folgenden Definitionsbereich annehmen: [90°, 180°], gemessen in Bezug auf den Vektor des Rotorflusses.

Gemäß einer bevorzugten Ausgestaltung der Erfindung wird ein Vorliegen eines Zündkriteriums anhand einer Raumzeigerdarstellung von Rotorfluss $\vec{\Psi}_2^S$, Netzspannung $\vec{U}_1^S$ und Statorstrom $\vec{I}_1^S$ geprüft. Mit Hilfe einer Raumzeigerdarstellung können die Verhältnisse zwischen Netzgrößen wie Spannung und Strom, den Rotorflussgrößen, dem Zündwinkelbereich und dem Fluss- und Drehmomentwinkelbereich anschaulich dargestellt werden. In der Raumzeigerdarstellung liegt der Hauptunterschied zwischen der vorliegenden Erfindung und den herkömmlichen Ansteuerverfahren darin, dass der Rotorflussraumzeiger bei der Wahl eines Zündzeitpunkts Berücksichtigung findet. Die Berechnung eines Netzraumzeigers, z. B. des Spannungsraumzeigers, und des Rotorflussraumzeigers und des Zündwinkel- und des Fluss- und Drehmomentwinkelbereichs kann zyklisch erfolgen. Jedes Mal, wenn eine Zündmöglichkeit in den Zündwinkel- und den Fluss- und Drehmomentwinkelbereichen liegt, kann eine Thyristorsteuerung erfolgen. Das führt zu Zündimpulsen, die sowohl die Netzspannung als auch den Rotorfluss berücksichtigen. Auf diese Weise können ein positives Drehmoment, ein begrenzter Statorstrom und ein für nachfolgende Zündungen ausreichender Rotorfluss erhalten werden.

Gemäß einer bevorzugten Ausgestaltung der Erfindung wird der Fluss- und Drehmomentwinkelbereich um einen Verdrehwinkel verschoben, um einen Zeitverzug zwischen einer Zündentscheidung und der Zündung auszugleichen. Dadurch kann der Effekt, dass wegen des rotierenden Rotors Abschätzungen zu positivem Drehmoment und Rotorflussentwicklung auf einer anderen Basis getroffen werden, als sie tatsächlich während der Zündung ablaufen, vermindert werden. Die in der Raumzeigerdarstellung vorgenommene Verdrehung um den Verdrehwinkel bezweckt, die Abweichung durch den rotierenden Rotor bestmöglich zu kompensieren.

Gemäß einer bevorzugten Ausgestaltung der Erfindung ist der Drehstrommotor ein Asynchronmotor, ein Synchronmotor oder ein PM-Line-Start-Motor (PM = Permanent-Magnet).

Gemäß einer bevorzugten Ausgestaltung der Erfindung ist der Prüfung von netzbezogenen und rotorflussbezogenen Zündkriterien ein Zeitabschnitt des Flussaufbaus vorgelagert, in dem durch Zündungen von Thyristoren Rotorfluss erzeugt wird.

Gemäß einer bevorzugten Ausgestaltung der Erfindung werden nur diejenigen Zündmöglichkeiten ermittelt, welche negative Drehmomente zur Folge haben und damit den Drehstrommotor aktiv bremsen. Somit kann das Verfahren auch zum aktiven Bremsen genutzt werden.

Die Aufgabe wird auch durch einen erfindungsgemäßen Sanft-starter gelöst, der geeignet ist, die Schritte des erfindungsgemäßen Verfahrens auszuführen. Der Sanftstarter weist eine Zündsignaleinheit zum Generieren von Zündsignalen und die Thyristoren auf. Die Zündsignaleinheit kann angesteuert werden, Zündsignale für einen bzw. mehrere der Thyristoren zu generieren. Der Sanftstarter weist außerdem Mittel auf, die geeignet sind, die Schritte des beschriebenen Verfahrens auszuführen. Diese Mittel können z. B. eine Steuereinheit sein, welche eine Recheneinheit und eine Speichereinheit aufweist. In die Speichereinheit kann ein Computerprogramm geladen und dort dauerhaft gespeichert werden, von wo es zur Ausführung in die Recheneinheit geladen werden kann.

Die skizzierte Aufgabenstellung wird außerdem durch ein erfindungsgemäßes Computerprogrammprodukt sowie ein computerlesbares Medium, auf dem das Computerprogrammprodukt gespeichert ist, gelöst. Das Computerprogrammprodukt ist in zumindest einem Prozessor ausführbar ausgebildet. Das Computerprogrammprodukt kann als Software, z. B. als eine aus dem Internet herunterladbare App, oder als Firmware in einem Speicher speicherbar und durch einen Prozessor oder ein Rechenwerk ausführbar ausgebildet sein. Alternativ oder ergänzend kann das Computerprogrammprodukt auch zumindest teilweise als festverdrahtete Schaltung ausgebildet sein, beispielsweise als ein ASIC (ASIC = Application-Specific Integrated Circuit). Das erfindungsgemäße Computerprogrammprodukt umfasst Befehle, die bewirken, dass der erfindungsgemäße Sanftstarter die Verfahrensschritte des beschriebenen Verfahrens ausführt. Das Computerprogrammprodukt ist also dazu ausgebildet, das Verfahren zum Betreiben eines Drehstrommotors mittels eines Sanftstarters durchzuführen. Insbesondere ist es dazu ausgebildet, neben einem netzbezogenen Zündkriterium ein rotorflussbezogenes Zündkriterium zu berücksichtigen. Außerdem umfasst das Computerprogrammprodukt Befehle, die bewirken, dass die Zündsignaleinheit des erfindungsgemäßen Sanftstarters ein oder mehrere Zündsignale für einen bzw. mehrere Thyristoren erzeugt, falls die Entscheidung für eine Zündmöglichkeit getroffen wurde. Erfindungsgemäß ist das Computerprogrammprodukt dazu ausgebildet, mindestens eine Ausführungsform des skizzierten Verfahrens umzusetzen und durchzuführen. Dabei kann das Computerprogrammprodukt sämtliche Teilfunktionen des Verfahrens in sich vereinigen, also monolithisch ausgebildet sein. Alternativ kann das Computerprogrammprodukt auch segmentiert ausgebildet sein und jeweils Teilfunktionen auf Segmente verteilen, die auf separater Hardware ausgeführt werden. So kann das Computerprogrammprodukt teilweise in einer Steuereinheit des Sanftstarters und teilweise in einer externen Steuereinheit ausführbar ausgebildet sein. Außerdem kann ein Teil des Verfahrens in einem Sanftstartergerät durchgeführt werden und ein anderer Teil des Verfahrens in einer dem Sanftstartergerät übergeordneten Steuereinheit, wie beispielsweise einer SPS, einem Handparametriergerät oder einer Computer-Cloud.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

| FIG 1 | eine herkömmliche Sanftstartertopologie; |
|---|---|
| FIG 2 | eine herkömmliche Struktur zur Generierung von Ansteuerimpulsen; |
| FIG 3 | eine Struktur zur Generierung von Ansteuerimpulsen gemäß einem modellprädikativen Verfahren; |
| FIG 4 | ein Beispiel einer Raumzeigerdarstellung; |
| FIG 5 | eine Darstellung eines pulsierenden Stromvektors nach einer 2-Phasen-Zündung der Phasen a und b im $\alpha$-$\beta$-Koordinatensystem; |
| FIG 6 | eine Darstellung einer Drehoperation zwischen einem Raumzeigerdiagramm in einem $\alpha$-$\beta$-Koordinatensystem und einem und Raumzeigerdiagramm in einem d-q-Koordinatensystem; |
| FIG 7 | eine Darstellung der Definition des Zündwinkels $\alpha$; |
| FIG 8 | eine Darstellung der Definition des Zündwinkelbereichs $[\alpha_{min}; \alpha_{max}]$ ; |
| FIG 9 | eine Illustration des Problems der Nulldurchgangserkennung; |
| FIG 10 | ein Raumzeigerdiagramm mit Rotorflusszeiger und Bereichen mit positivem und negativem Drehmoment; |
| FIG 11 | ein Raumzeigerdiagramm mit Rotorflusszeiger, Spannungszeiger und einem Bereich mit möglichen Zündungen; |
| FIG 12 | ein Raumzeigerdiagramm mit Spannungszeiger und Zündfenster; |
| FIG 13 | ein Raumzeigerdiagramm mit Rotorflusszeiger, Spannungszeiger und Zündfenster; |
| FIG 14 | ein Raumzeigerdiagramm mit Rotorflusszeiger, Spannungszeiger und Bereichen, welche die Rotorflussverkettung stärken bzw. schwächen; |
| FIG 15 | ein Raumzeigerdiagramm, welches die Informationen von FIG 10 und FIG 14 in einer Darstellung zusammenfasst; |
| FIG 16 | ein Raumzeigerdiagramm mit Rotorflusszeiger und einem Flussfenster; |
| FIG 17 | ein Raumzeigerdiagramm mit Rotorflusszeiger, Zündfenster und Flussfenster; |
| FIG 18 | ein Raumzeigerdiagramm mit Rotorflusszeiger, Spannungszeiger, Zündfenster und Flussfenster; |
| FIG 19 bis 24 | eine Zeitreihe eines Raumzeigerdiagramms über einen Zeitraum von 3,9 ms mit Rotorflusszeiger, Spannungszeiger und rotierendem Statorstromzeiger; |
| FIG 25 bis 28 | eine Zeitreihe eines Raumzeigerdiagramms über einen Zeitraum von 6 ms mit Rotorflusszeiger, Spannungszeiger und rotierendem Statorstromzeiger im Falle eines drehenden Rotors; |
| FIG 29 | ein Raumzeigerdiagramm mit Rotorflusszeiger, Spannungszeiger, Zündfenster und Flussfenster; |
| FIG 30 | ein Raumzeigerdiagramm mit Rotorflusszeiger, Spannungszeiger, Zündfenster und einem Flussfenster, welches gegenüber dem Flussfenster in FIG 29 um einen Verdrehwinkel $\delta_{rot}$ gedreht wurde; |
| FIG 31 | eine Darstellung der Definition von $t_{delay}$; |
| FIG 32 | ein Raumzeigerdiagramm mit Rotorflusszeiger und Spannungszeiger, welches die Grenzen des Zündwinkelbereichs und des Rotorflusswinkelbereich darstellt; |
| FIG 33 | ein Ablaufdiagramm gemäß einer Ausführungsform des erfindungsgemäßen Verfahrens; und |
| FIG 34 | eine Struktur zur Generierung von Ansteuerimpulsen gemäß der Erfindung. |

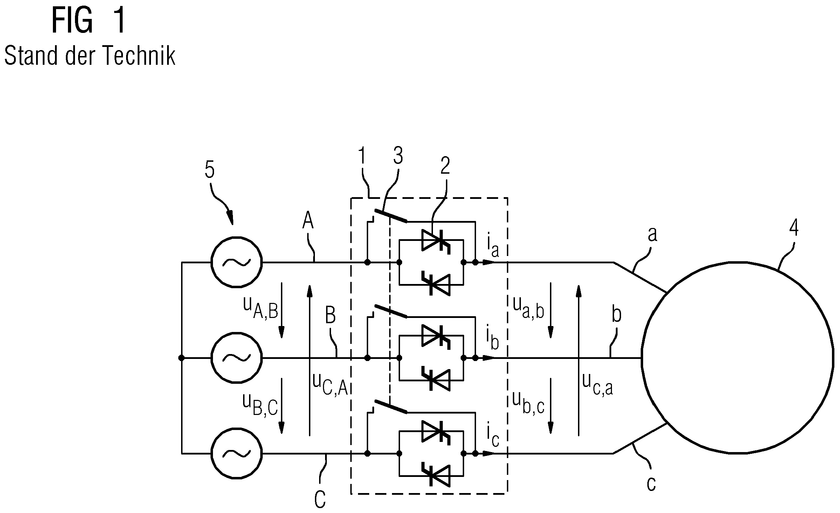

FIG 1 zeigt eine typische Sanftstartertopologie mit einem zwischen ein dreiphasiges elektrisches Netz 5 und einen Asynchronmotor (= ASM) 4 geschalteten Sanftstarter 1 zum Starten des ASM 4, mit je einem antiparallel geschalteten Paar von Thyristoren 2 und je einem Bypass-Kontakt 3 pro Phase a, b, c. Der Strom $i_a$, $i_b$, $i_c$ wird motorseitig in allen Phasen a, b, c gemessen. Zusätzlich nutzt der Sanftstarter 1 netzseitige Leitungs-zu-Leitungs-Messungen $u_{A,B}$, $u_{B,C}$, $u_{C,A}$, um die Netzspannungen $u_A$, $u_B$, $u_C$, und motorseitige Leitungs-zu-Leitungs-Messungen $u_{a,b}$, $u_{b,c}$, $u_{c,a}$, um die Motorspannungen $u_a$, $u_b$, $u_c$ zu berechnen. Ähnliche Topologien, bei denen allerdings nur zwei von drei Netzphasen im Sanftstarter schaltbar sind, sind in dem Siemens-Gerätehandbuch Sanft-starter SIRIUS 3RW50, Siemens AG, Amberg, 09/2019, A5E35628455001A/RS-AA/001, Kapitel A.1. zu finden.

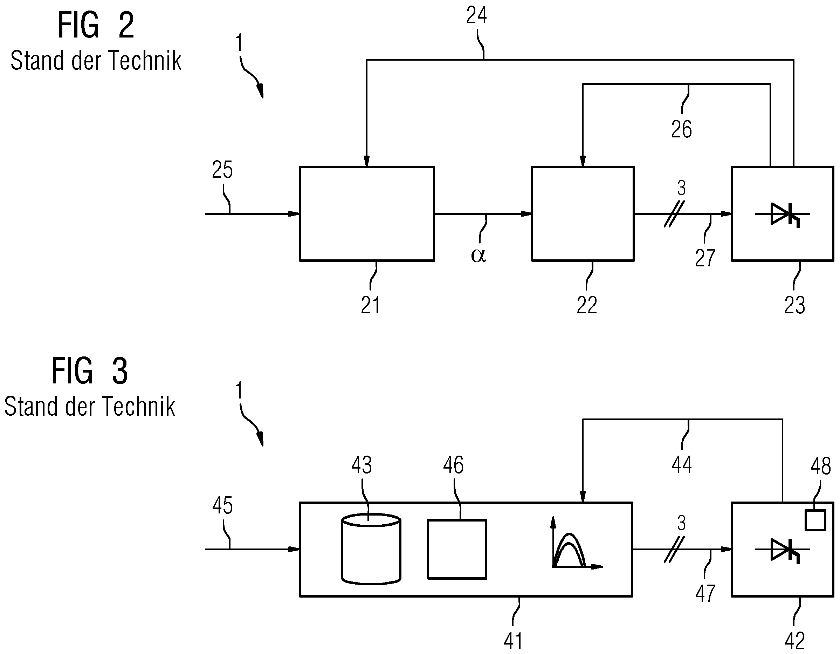

Zwar wurde der Funktionsumfang von Sanftstartern in den letzten Jahrzehnten immer weiter vergrößert, z.B. durch Spannungsrampe, strombegrenzten Betrieb, drehmoment-geregelten Hochlauf und drehzahl-geregelten Hochlauf, allerdings ist die Struktur zur Generierung von Ansteuerimpulsen in den wesentlichen Grundzügen gleichgeblieben und hat die in FIG 2 gezeigte Struktur, welche im Wesentlichen drei Blöcke umfasst, die im Folgenden erläutert werden: In einem ersten Block des Sanftstarters 1, dem Controller 21, wird durch eine Reglerstruktur der Stellwert des Zündwinkels $\alpha$, auch Steuer- oder Ansteuerwinkel genannt, aus Messwerten 24 wie Statorstrom $I_{1,RMS}$, Statorspannung $U_{1,RMS}$ und/oder Rotordrehzahl n des Motors erzeugt. Der Zündwinkel $\alpha$ kann durch Eingangsparameter 25, z. B. das aktuelle Motordrehmoment, den maximalen Sollstrom oder eine Drehzahlrampe, so beeinflusst werden, dass das Verhalten für die Applikation optimal wird. Der Zündwinkel $\alpha$ definiert den RMS-Wert der an den einzelnen Phasen a, b, c des Motors anliegenden Spannungen (RMS = Root-Mean-Square). Eine einfache Art, einen Zündwinkel $\alpha$ zu generieren, ist eine Spannungsrampe, unabhängig von der Lastreaktion; dazu wird der Zündwinkel $\alpha$ einfach als Funktion der Zeit vergrößert. Dabei muss mit einem ausreichend großen Anfangswert des Zündwinkels $\alpha$ begonnen werden, damit das anfängliche Motordrehmoment $M_M$ bereits größer als das Lastdrehmoment $M_L$ ist; andernfalls würde der Motorstrom den Rotor nicht beschleunigen und im Stillstand nur hohe Verluste erzeugen, bis das Motordrehmoment hoch genug ist, um den Rotor zu beschleunigen.

Ein zweiter Block des Sanftstarters 1, ein Ansteuersignalblock 22, dient der Generierung von Ansteuersignalen 27 zum Auslösen von Thyristorzündungen, wobei die Ansteuersignale 27 in Abhängigkeit von einer gemessenen Spannung, z. B. der Netzspannung 26, und/oder eines gemessenen Stroms, vorzugsweise mit einer definierten Zeit zwischen einer bei einer Unterschreitung eines Mindeststroms erfolgenden Abschaltung eines Thyristors und einer erneuten Zündung des Thyristors, erzeugt werden.

Ein dritter Block des Sanftstarters 1, ein Hardware-Block 23, umfasst Thyristoren und Zündvorrichtungen, z. B. eine Zündsignaleinheit; er benutzt die vom Ansteuersignalblock 22 empfangenen Ansteuersignale 27 zum Generieren der Ausgangsspannung.

FIG 3 zeigt eine Struktur zur Generierung von Ansteuerimpulsen gemäß einem modellprädikativen Ansteuerverfahren, wie es in der europäischen Patentanmeldung EP20176295.2 sowie in Nannen et al. beschrieben ist. Der Sanftstarter 1 kann zum Beispiel in einer Topologie, wie sie in FIG 1 gezeigt ist, eingesetzt werden. Der Sanftstarter 1 weist eine Steuerungseinheit 41 mit einer Recheneinheit 46, auch als Prozessor bezeichnet, und einer Speichereinheit 43 auf. Die Recheneinheit 46 führt ein in der Speichereinheit 43 abgelegtes Computerprogramm, welches einen Algorithmus zur Ausführung des Verfahrens enthält, aus. Bei Ausführung des Algorithmus werden Zündmöglichkeiten für mindestens einen nächsten Zeitschritt ermittelt, mithilfe eines Motormodells das zu den Zündmöglichkeiten korrespondierende Motorverhalten vorherberechnet und schließlich auf Basis des vorhergesagten Motorverhaltens eine Entscheidung getroffen, ob und welche Zündmöglichkeit gewählt werden soll. Zur Initialisierung des Algorithmus werden Zustandsvariablen des Systems gemessen bzw. berechnet. Die Recheneinheit 46 erhält eine Reihe von Messwerten 44, z. B. den Motorstrom $I_1$, die Motorspannung $U_1$ und die Drehzahl n des Rotors, als Eingangswerte. Netzspannungen $u_A$, $u_B$, $u_C$ werden gemessen, um den Netzwinkel $\varphi_{grid}$ und die Netzspannungsamplitude $U_{grid}$ zu berechnen. Auch werden die Motorströme $i_a$, $i_b$, $i_c$ und Motorspannungen $u_a$, $u_b$, $u_c$ für eine modellbasierte Berechnung des Rotor-Flusses genutzt. Zusammen mit der gemessenen mechanischen Rotordrehzahl n und der Netzfrequenz $f_{grid}$ werden alle Systemvariablen definiert. Nach der Prädiktion steht fest, welche Möglichkeiten zur Zündung zu dem betrachteten Zeitpunkt in der Zukunft, d. h. welche Zündmöglichkeiten, bestehen. Diese Zündmöglichkeiten können dann auf eine Vielzahl von Entscheidungskriterien 45, z. B. ein maximales Drehmoment oder einen maximalen Statorstrom, überprüft und bewertet werden. Falls die Entscheidung für eine bestimmte Zündmöglichkeit getroffen wurde, generiert die Steuerung 41 ein oder mehrere Ansteuersignale 47 an einen Zünd-Block 42 des Sanftstarters 1, welcher Thyristoren und eine Zündsignaleinheit 48 zum Generieren von Zündsignalen für die Thyristoren aufweist. Die Ansteuersignale 47 veranlassen die Zündsignaleinheit 48, Zündsignale für einen bzw. mehrere der Thyristoren zu generieren, so dass sich das vorberechnete Motorverhalten einstellt.

Grundlage - Raumzeigerdarstellung

Basis der vorliegenden Beschreibung der Erfindung sind Raumzeigerdarstellungen: sie bieten die Möglichkeit, in einem mehrphasigen Netz auftretende mehrphasige physikalische Grö-ßen in einem einfacheren, zweiachsigen Koordinatensystem mit den Achsen $\alpha$, $\beta$ als um den Nullpunkt rotierende Raumzeiger, oder einfach: Zeiger, darzustellen. Der Übergang in das $\alpha$-$\beta$-Koordinatensystem erfolgt durch die Anwendung der Clarke-Transformation. Mittels Raumzeiger können physikalische Grö-ßen im System zu jedem Zeitpunkt dargestellt werden; bei der vorliegenden Erfindung sind dies vor allem magnetischer Fluss, Spannung und Strom.

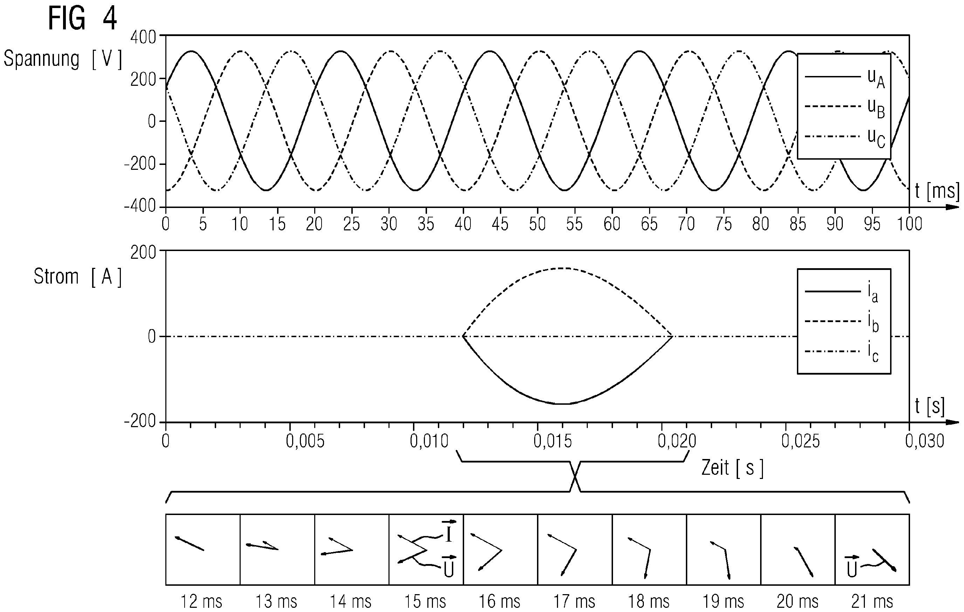

FIG 4 zeigt ein Beispiel einer Raumzeigerdarstellung: Im oberen Teil von FIG 4 ist eine gewöhnliche Darstellung des Verlaufs einer Dreiphasenwechselspannung U und eines Statorstroms I, auch als Motorstrom bezeichnet, über der Zeit gezeigt. Die Dreiphasenwechselspannung U stammt aus einem üblichen 50-Hz-Versorgungsnetz und besteht aus drei einzelnen sinusförmigen Wechselspannungen $u_A$, $u_B$, $u_C$ gleicher Frequenz mit einem Spitzenwert von 325 Volt, die zueinander in ihren Phasenwinkeln fest um 120° verschoben sind. Der Spannungsverlauf ist über den Zeitraum von 0 bis 100 ms dargestellt. Der Motorstrom $i_a$, $i_b$, $i_c$ in den drei Motorphasen a, b, c, dargestellt über den Zeitraum von 0 bis 30 ms, wurde durch eine einmalige zweiphasige Zündung in den Phasen a und b zum Zeitpunkt 12 ms in einer Konfiguration wie in FIG 1, mit einem Sanftstarter und einem angeschlossenen Motor, erzeugt.

Der untere Teil von FIG 4 zeigt in dem Zeitintervall von 12 ms bis 21 ms Raumzeigerdarstellungen von Spannung und Strom, in Zeitschritten von 1 ms. Die Skalierung der Zeiger ist für die Analyse hier irrelevant. Mit dickerer Strichstärke ist der Spannungszeiger $\vec{U}$ dargestellt, mit dünnerer Strichstärke der Stromzeiger $\vec{I}$. Zum Zeitpunkt t = 12 ms fließt noch kein Strom; demnach ist nur der Spannungszeiger $\vec{U}$ zu sehen. Beim Vergleich der Bilder zu den Zeitpunkten t = 12 ms und t = 13 ms fällt zunächst auf, dass der Spannungszeiger $\vec{U}$ sich ein wenig weitergedreht hat. Dies ist auch zu den nachfolgenden Zeitschritten zu sehen. Gemäß der Dreiphasenwechselspannung handelt es sich um einen rotierenden Spannungszeiger $\vec{U}$, der proportional zur Netzfrequenz $f_{grid}$ = 50 Hz rotiert: der Spannungszeiger $\vec{U}$ rotiert mit einer Kreisfrequenz $\omega = 2\pi f_{grid}$ = 2n 50 Hz = $2\pi$ / (20 ms) entgegen dem Uhrzeigersinn um den jeweils in der Mitte der Zeitschritt-Fenster liegenden Nullpunkt. Die Amplitude und damit die Zeigerlänge des Spannungszeigers $\vec{U}$ bleiben im idealen Netz, in dem keine Impedanz und keine Spannungsabfälle auf der Leitung existieren, konstant. In der Raumzeigerdarstellung zum Zeitpunkt t = 13 ms ist außerdem erkennbar, dass der einsetzende Stromfluss zu einem Stromzeiger $\vec{I}$ führt, der zunächst noch einen geringen Betrag aufweist. Aus den Raumzeigerdarstellungen zu den nachfolgenden Zeitschritten ist erkennbar, dass der Stromzeiger $\vec{I}$ seine Länge immer weiter steigert, während seine Richtung konstant bleibt; dies ist typisch für zweiphasige Zündungen. Zum Zeitpunkt t = 16 ms hat der Stromzeiger $\vec{I}$ sein Maximum erreicht, ab dann reduziert sich seine Länge in jedem Zeitschritt, bis der Stromfluss zum Zeitpunkt t = 21 ms beendet ist.

Dieses Beispiel zeigt, wie mithilfe der Raumzeigerdarstellung Verhältnisse zwischen unterschiedlichen physikalischen Grö-ßen, hier: Spannung und Strom, anschaulich dargestellt werden können.

Grundlage - Zweiphasige Zündungen

Beim Sanftstarter sind verschiedene Zündungen möglich, die ein unterschiedliches Verhalten des Motors auslösen. Entweder es wird 2-phasig (Phasen a&b, b&c, c&a) oder 3-phasig (Phasen a&b&c) gezündet. Die 2-phasige Zündung führt, wie bereits in FIG 4 gezeigt, zu Stromvektoren, die in ihrer Ausrichtung fest und in ihrer Amplitude pulsierend sind.

Wenn die Thyristoren in den beiden Netzphasen a, b der drei Netzphasen a, b, c gezündet werden, werden diese Phasen a, b stromleitend, wohingegen der Thyristor in der dritten Phase c stromsperrend bleibt. Weil die Summe der Ströme I in allen drei Phasen a, b, c stets Null sein muss, muss der Strom, der in einer der leitenden Phasen a, b zum Motor hin fließt, identisch zu dem Strom sein, der in der anderen leitenden Phase vom Motor weg fließt; daher sind die Stromamplituden in den beiden leitenden Phasen a, b exakt gleich, nur mit entgegengesetzten Vorzeichen.

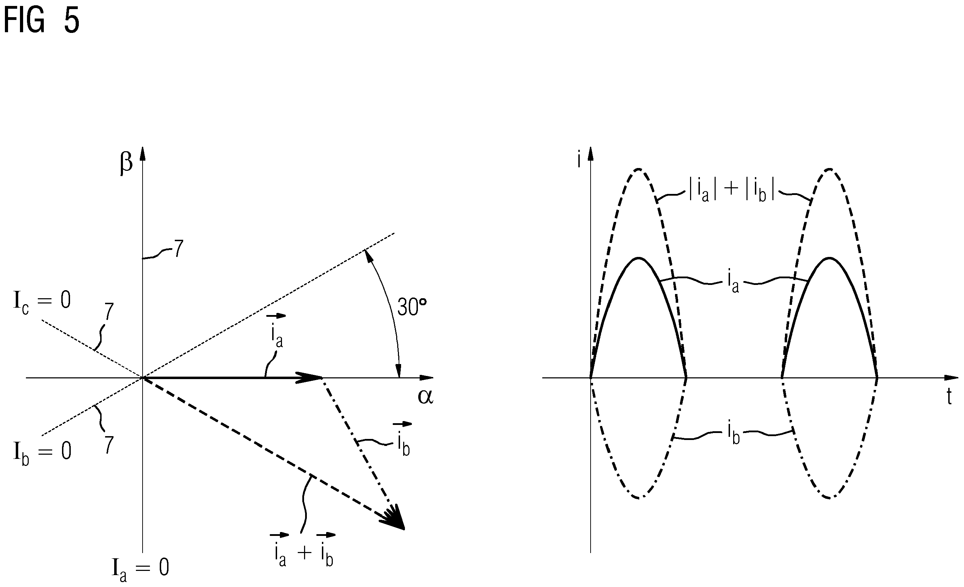

FIG 5 betrifft eine 2-Phasen-Zündung der Phasen a und b. Im linken Diagramm von FIG 5 ist in einem feststehenden $\alpha$-$\beta$-Koordinatensystem offensichtlich, dass diese Bedingung zu einem pulsierenden Stromvektor $\vec{i_a} + \vec{i_b}$ entlang der Bahn $I_c$=0 führt, wobei der Stromvektor $\vec{i_a} + \vec{i_b}$ zwar in der Länge variiert, seine Richtung aber konstant beibehält. Daher variiert nur der Absolutwert $|i_a+i_b|$ des Stromvektors $\vec{i_a} + \vec{i_b}$. Es ergeben sich bei 2-Phasen-Zündungen also feste Bahnen 7, auf denen pulsierende Stromraumzeiger erzeugt werden können; im linken Diagramm von FIG 5 sind diese Bahnen 7 mit $I_a$ = 0, $I_b$ = 0 und $I_c$ = 0 gekennzeichnet, wobei die Bahn $I_a$ = 0 entlang der $\beta$-Achse verläuft und die Bahn $I_b$ = 0 einen Winkel von 30° mit der $\alpha$-Achse einschließt; jede der Bahnen 7 schließt mit der nächstbenachbarten Bahn 7 einen Winkel von 60° ein. Bei einer dreiphasigen Zündung hingegen bildet auch der Strom einen rotierenden Raumzeiger - ähnlich wie bei der Spannung. Im rechten Diagramm von FIG 5 sind die Stromamplituden $i_a$, $i_b$ in den beiden leitenden Phasen a, b sowie der Absolutwert $|i_a|+|i_b|$ des durch eine 2-Phasen-Zündung generierten Stromvektors $\vec{i_a} + \vec{i_b}$ über der Zeit t dargestellt.

Grundlage - Motormodellierung und Drehoperationen

Die vorliegende Erfindung ist generell anwendbar auf eine Drehstrommaschine, die an einen Sanftstarter angeschlossen ist. Dabei kann der Drehstrommotor als eine Asynchronmaschine, eine Synchronmaschine oder ein PM-Line-Start-Motor ausgebildet sein.

Eine Asynchronmotormodellierung wurde in der in der Beschreibungseinleitung genannten europäischen Patentanmeldung EP20176295.2 sowie in Nannen et al. detailliert erläutert. Alle dort gemachten Definitionen für Symbole finden auch in der vorliegenden Beschreibung Anwendung. Die in diesen Publikationen beschriebenen Motormodellgleichungen, von denen hier ausgegangen wird, lauten:

$$\frac{d\vec{I}_1^{\mathrm{S}}}{dt} = \frac{1}{\sigma \cdot L_1} \cdot \vec{U}_1^{\mathrm{S}} - \frac{R_1 \cdot L_2^2 - R_2 \cdot L_{\mathrm{h}}^2}{\sigma \cdot L_1 \cdot L_2^2} \cdot \vec{I}_1^{\mathrm{S}} +$$

$$\frac{R_2 \cdot L_{\mathrm{h}}}{\sigma \cdot L_1 \cdot L_2^2} \cdot \vec{\Psi}_2^{\mathrm{S}} - j \cdot \frac{\Omega_{\mathrm{L}} \cdot L_{\mathrm{h}}}{\sigma \cdot L_1 \cdot L_2} \cdot \vec{\Psi}_2^{\mathrm{S}}$$

$$\frac{d\vec{\Psi}_2^{\mathrm{S}}}{dt} = \frac{R_2 \cdot L_{\mathrm{h}}}{L_2} \cdot \vec{I}_1^{\mathrm{S}} - \frac{R_2}{L_2} \cdot \vec{\Psi}_2^{\mathrm{S}} + j \cdot \Omega_{\mathrm{L}} \cdot \vec{\Psi}_2^{\mathrm{S}} \qquad (1)$$

$$M_{\mathrm{M}} = \frac{3}{2} \cdot p \cdot \frac{L_{\mathrm{h}}}{L_2} \cdot \vec{\Psi}_2^{\mathrm{S}} \times \vec{I}_1^{\mathrm{S}} \qquad (2)$$

Der tiefgestellte Index (Subskript) 1 identifiziert eine Stator-bezogenen Größe, der tiefgestellte Index 2 eine Rotorbezogene Größe. Der hochgestellte Index (Superskript) S gibt an, dass sich die Größe auf ein Stator-festes Koordinatensystem bezieht. Das Motormodell verwendet den Statorstrom $\vec{I}_1^S$, den Streukoeffizienten σ (engl.: Blondel's coefficient), die Induktivitäten $L_1$, $L_2$, die Spannung $\vec{U}_1^S$, die Widerstände $R_1$, $R_2$, den verketteten Rotorfluss $\vec{\Psi}_2^S$, die Hauptinduktivität $L_{\mathrm{h}}$ (engl.: mutual inductance), die Rotorgeschwindigkeit $\Omega_{\mathrm{L}}$ und das Motor-Drehmoment $M_{\mathrm{M}}$.

In der europäischen Patentanmeldung EP20176295.2 und in Nannen et al. wird an dieser Stelle eine Koordinatentransformation eingeführt, welche die Koordinaten im α-β-Koordinatensystem um den Drehwinkel $\varphi_{\mathrm{K}}$ dreht:

$$\vec{I}_1^{\mathrm{K}} = \vec{I}_1^{\mathrm{S}} \cdot e^{-j\varphi_{\mathrm{K}}} \qquad (3)$$

Der Drehwinkel $\varphi_{\mathrm{K}}$ wird dabei so gewählt, dass der Rotorflussvektor $\vec{\Psi}_2^S$ nach dem Vollzug der Drehung in die positive Richtung der d-Achse des d-q-Koordinatensystems zeigt. Der Wert d bildet die magnetische Flussdichte der magnetischen Erregung im Rotor ab, und q ist ein Ausdruck für das vom Rotor erzeugte Drehmoment. Zur Verdeutlichung: Alle Vektoren werden nun im α-β-Koordinatensystem um den Winkel $\varphi_{\mathrm{K}}$ gedreht. Entsprechend ergibt sich also für den Strom:

$$\vec{I}_1^K = I_{1d} + j\, I_{1q} \qquad (4)$$

Diese Drehoperation ist Grundlage für die gesamte Theorie der feldorientierten Regelung von Motoren am Umrichter und wird hier ausgeführt, um die zu betrachtenden Vorgänge leichter durchschaubar zu machen. Man spricht in diesem Zusammenhang von der Rotorflussorientierung. In den Gleichungen (3) und (4) gibt der Index K an, dass sich die indexierte Größe auf ein beliebiges Koordinatensystem bezieht.

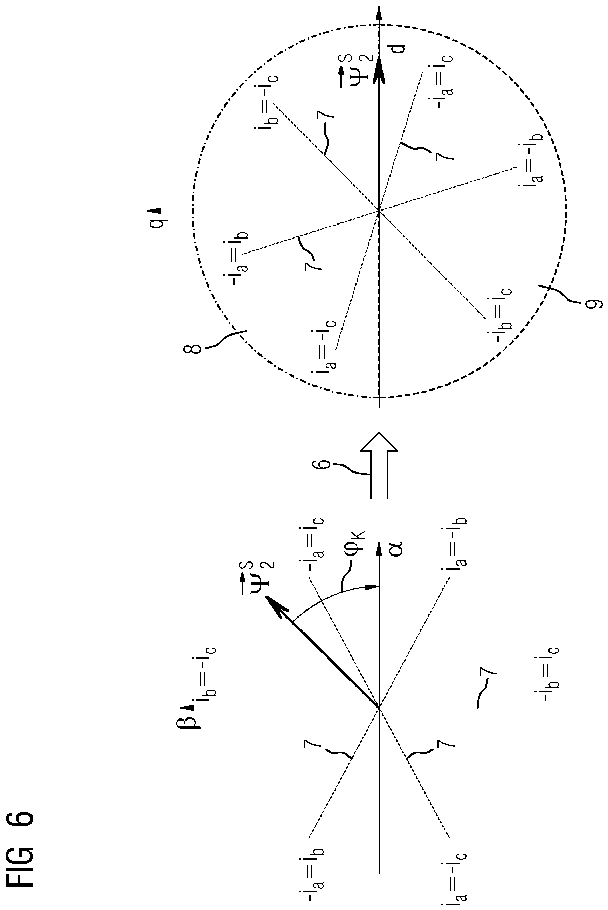

FIG 6 illustriert die Drehoperation: im linken Teil der FIG 6 ist die Position des Flusszeigers $\vec{\psi}_2^{S}$ vor der Rotation um den Drehwinkel $\varphi_K$ gezeigt und die Drehung des Flusszeigers um den Drehwinkel $\varphi_K$ angedeutet. Wie oben mit Bezug auf FIG 5 erläutert, führt eine 2-phasige Zündung zu einem Stromvektor mit fixer Richtung, aber pulsierender Amplitude. Diese fixen Richtungen des Stromvektors, die sich bei den drei möglichen 2-phasigen Zündkombinationen a&b, b&c, a&c ergeben, sind in FIG 6 gestrichelt 7 eingezeichnet; in dieser Beschreibung werden diese fixen Richtungen 7, in denen der durch eine 2-phasige Zündung erzeugte Stromvektor pulsiert, auch als Bahnen bezeichnet.

Durch diese Drehoperation 6 werden der Flusszeiger $\vec{\psi}_2^{S}$ und die Bahnen 7 in die im rechten Teil der FIG 6 gezeigte Positionen gebracht: der Flusszeiger $\vec{\psi}_2^{S}$ zeigt in die Richtung der d-Achse.

Im d-q-Koordinatensystem kann man einen ersten Bereich 8 mit Zündungen für positives Drehmoment, umfassend den strichpunktiert umrandeten Halbraum mit positiven q-Werten, und einen zweiten Bereich 9 mit Zündungen für negatives Drehmoment, umfassend den gestrichelt-umrandeten Halbraum mit negativen q-Werten, unterscheiden, die entlang der d-Achse aneinandergrenzen.

Die durch die Drehoperation 6 gewonnene Darstellung, bei der das d-q-Koordinatensystem zu jedem Zeitpunkt am Rotorflusszeiger $\vec{\psi}_2^{S}$ ausgerichtet ist, also der gesamte Rotorfluss in d-Richtung liegt, ermöglicht es, den Strom in einen feldbildenden Strom, der dem Stromzeigeranteil entlang der d-Achse entspricht, und einen drehmomentbildenden Strom, der dem Stromzeigeranteil entlang der q-Achse entspricht, aufzuteilen.

Einer der großen Vorteile der Darstellung im d-q-Koordinatensystem ist, dass die Gleichung (2) für das Motordrehmoment $M_M$ sich stark vereinfacht und zu einer einfachen Multiplikation wird:

$$M_{\mathrm{M}} \quad = \quad \frac{3}{2} \cdot p \cdot \frac{L_{\mathrm{h}}}{L_2} \cdot \Psi_{2d} \cdot I_{1\mathrm{q}} \tag{5}$$

$\Psi_{2d}$ ist die d-Komponente des verketteten Rotorflusses im d-q-Koordinatensystem, $I_{1q}$ die q-Komponente des Statorstroms im d-q-Koordinatensystem: Nur die senkrecht aufeinander stehenden Komponenten von Rotorfluss und Statorstrom tragen zum Motordrehmoment bei.

Grundlage - Überführung klassischer Verfahren mit Zündwinkeln in die Vektordarstellung

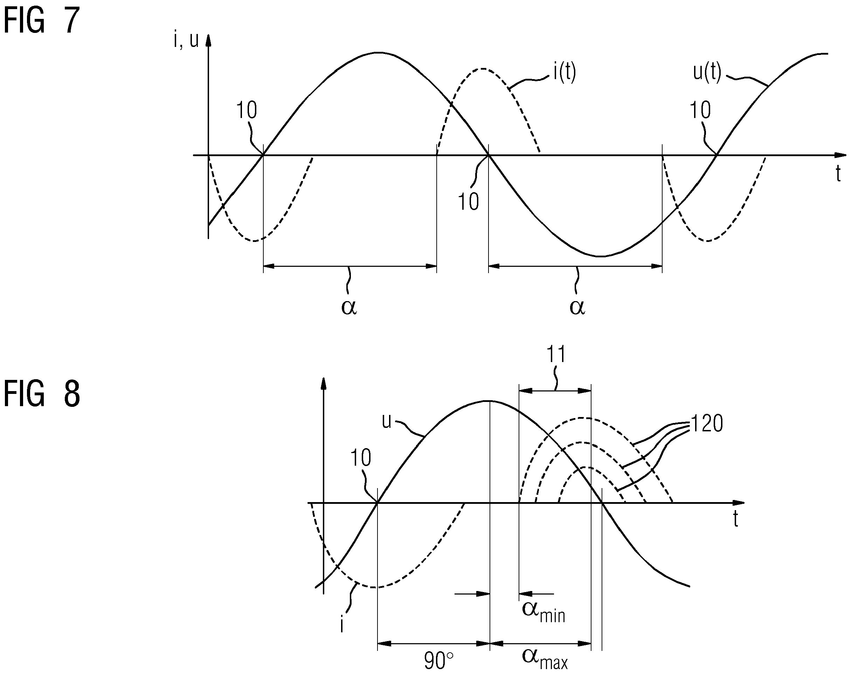

Die heute in der Industrie üblichen Verfahren zur Ansteuerung von Sanftstartern basieren auf einem Zündwinkel $\alpha$. Dieser kann auf die Netzspannungslage oder auf den Phasenstrom bezogen werden. Als Startpunkt für die Herleitung des erfindungsgemäßen Zünd-Algorithmus, der eine relativ geringe Rechenleistung erfordert, wird der heute übliche Algorithmus verwendet. FIG 7 illustriert die herkömmliche Definition des Zündwinkels $\alpha$, der den Zündzeitpunkt in Bezug auf die Netzspannung, genauer: auf die Nulldurchgänge 10 der Netzspannung, festlegt. Eine Zündung der Thyristoren hat also immer einen festen Abstand $\alpha$ zu dem unmittelbar vorhergehenden Netzspannungsnulldurchgang 10. FIG 7 zeigt auch die durch die jeweiligen Zündungen ausgelösten Stromimpulse i(t) als gestrichelte Kurven; das Vorzeichen eines Stromimpulses i(t) entspricht dem Vorzeichen der Spannung u(t) zum jeweiligen Zündzeitpunkt.

Diese herkömmliche Definition des Zündwinkels $\alpha$ erschwert die Integration weiterer Kriterien hinsichtlich einer Zündentscheidung: da ein exakter Zündzeitpunkt festgelegt ist, an dem die Zündung stattfinden muss, könnte ein weiteres Kriterium also nur noch beeinflussen, ob die Zündung überhaupt stattfindet oder nicht. Da diese restriktive Definition keinen Spielraum zum Einbeziehen eines weiteren Kriteriums, z. B. den Einbezug des Rotorflusses als ein weiteres Zündkriterium zusätzlich zum Netzwinkel/Netzspannungsnulldurchgang, lässt, wird diese Definition so modifiziert, wie in FIG 8 dargestellt: anstelle eines konkreten Zündzeitpunkts, dem Zündwinkel $\alpha$, wird nun ein Winkelbereich, der sogenannte Zündwinkelbereich 11, definiert, innerhalb dessen der Zündzeitpunkt liegen soll. Der Zündwinkelbereich 11 wird auch als Zündsektor oder Zündfenster (engl: firing window) bezeichnet. Der Zündzeitpunkt kann aus einem Wertebereich $[\alpha_{min}; \alpha_{max}]$ gewählt werden, der von einem unteren Grenzwert $\alpha_{min}$, dem Minimalzündwinkel, und einem oberen Grenzwert $\alpha_{max}$, dem Maximalzündwinkel, begrenzt ist. Durch die Einführung des Zündwinkelbereichs 11 besteht die Möglichkeit zu mehr Alternativen in der Wahl eines Zündzeitpunkts, da nicht nur ein Zeitpunkt, sondern eine Winkelbereich und somit eine Zeitspanne zur Zündung zur Verfügung steht. Verglichen mit dem Bezugspunkt "Spannungsnulldurchgang" des herkömmlichen Zündwinkels $\alpha$ ist der Bezugspunkt des Zündfensters um 90 Grad verschoben. Selbstverständlich sind auch Ausgestaltungen möglich, bei denen die Breite des Zündfensters 11 gleich Null ist ($\alpha_{min}$ = $\alpha_{max}$), d.h. nur ein einziger Zündzeitpunkt möglich ist.

Aufgrund der Einführung eines Zündfensters ist nicht nur ein einziger Strompuls, wie in FIG 7 als i(t) dargestellt, möglich, sondern eine Schar von Strompulsen 120, wie in FIG 8 als gestrichelte Kurven gezeichnet. Wie FIG 8 zeigt, ergibt sich bei einer Wahl des kleinsten Winkels $\alpha_{min}$ ein Strompuls 120 mit der größten möglichen Stromamplitude. Je größer der Zündwinkel $\alpha$ gewählt wird, d. h. je mehr sich der Zündwinkel dem oberen Grenzwert $\alpha_{max}$ annähert, desto kleiner wird die Stromamplitude des entstehenden Strompulses 120; bei einer Wahl des größten Winkels $\alpha_{max}$ ergibt sich ein Strompuls 120 mit der kleinsten möglichen Stromamplitude. Eine grundlegende Betrachtung des Asynchronmotors als Last erklärt diesen Zusammenhang: sehr stark vereinfacht kann ein Asynchronmotor als eine Serienschaltung einer Induktivität und eines Widerstands dargestellt werden; er wirkt also immer ohmsch-induktiv. Das hat zu Folge, dass der Strom, der aufgrund einer angelegten Spannung fließt, dieser zeitlich immer nacheilt. Für die Erzeugung der Ansteuerimpulse bedeutet dies, dass die Zündung immer vor dem zugehörigen Spannungsnulldurchgang 10 ausgeführt werden muss. Je weiter vor dem Spannungsnulldurchgang 10 die Zündung erfolgt, desto größer der entstehende Strom.

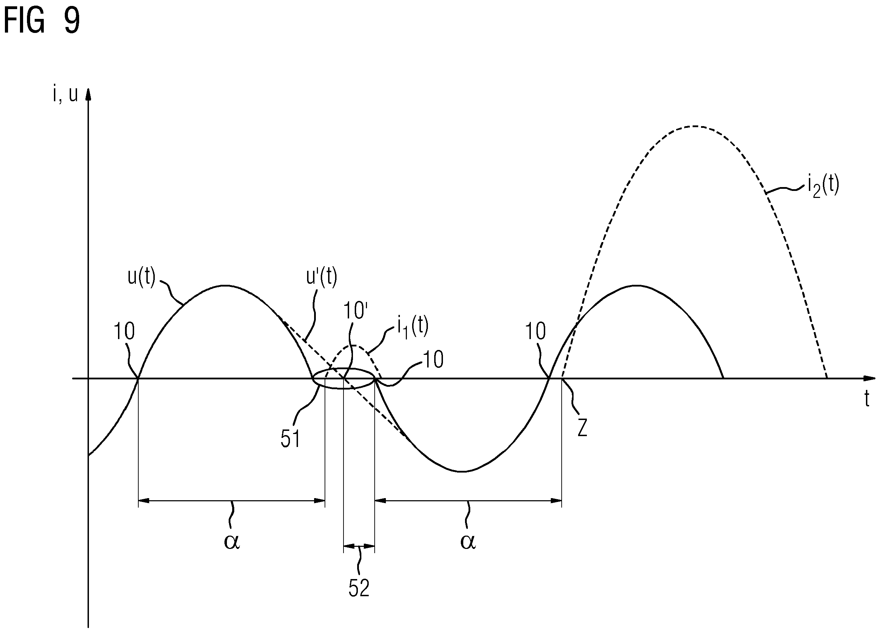

Durch die Wahl des oberen Grenzwerts $\alpha_{max}$ des Zündwinkelbereichs 11 kann sichergestellt werden, dass auch in einem Fall, dass die Spannungsnulldurchgangserkennung (engl.: voltage zero crossing detection) den Nulldurchgang nicht genau erkennt, kein unerwarteter Zündpuls generiert wird; derartige unerwartete Zündpulse können aufgrund ihrer sehr hohen Stromamplituden das Sanftstarter-Motor-System schädigen. FIG 9 illustriert in einem Beispiel die Folgen, welche eintreten können, falls ein Nulldurchgang der Netzspannung nicht korrekt erkannt wird: die Amplitude einer sinusförmige Netzspannung u(t) ist über der Zeit t aufgetragen. Eine Zündung der Thyristoren erfolgt in einem festen Winkelabstand $\alpha$ zu den Nulldurchgängen 10 der Netzspannung u(t). Aufgrund hoher Oberwellenbelastung oder Verzerrungen im Bereich vor und nach dem Nulldurchgang 10 der Netzspannung kann ein nicht-sinusförmiger Spannungsbereich 51 entstehen. Der theoretische Nulldurchgang 10' der idealen Netzspannung u'(t) wird aufgrund des nicht-sinusförmigen Spannungsbereichs 51 um eine Verzögerungsdauer 52 verzögert; entsprechend beginnt die Messung des Zündwinkels $\alpha$ nicht am theoretische Nulldurchgang 10', sondern am real gemessenen Nulldurchgang 10. Die nachfolgende Zündung 2 erfolgt also, wegen der Verzögerung des letzten Spannungsnulldurchgangs 10, nicht vor, sondern nach dem erneuten Spannungsnulldurchgang 10: damit wird statt einem sehr großen Ansteuerwinkel ein sehr kleiner Ansteuerwinkel gestellt, und damit ein zweiter Strompuls $i_2(t)$ erzeugt, dessen Amplitude um ein Vielfaches größer ist als die des vorhergehenden ersten Strompulses $i_1(t)$. Eine solches ungünstiges Szenario kann durch eine entsprechende Wahl des oberen Grenzwerts $\alpha_{max}$ des Zündwinkelbereichs 11 ausgeschlossen werden, so dass nur diejenigen Zündpulse durchgelassen werden, die zu akzeptablen Stromamplituden führen, auch wenn es im System Unsicherheiten hinsichtlich des Nulldurchgangs der Netzspannung gibt.

Fluss-orientierter Start-Algorithmus für Sanftstartergesteuerte Induktionsmotoren

Die vorhergehenden Grundlagen und Zusammenhänge bilden die Basis für die Erläuterung der Erfindung. Aus Gleichung (5) kann folgende Schlussfolgerung gezogen werden: Hat der Statorstrom $I_{1q}$ einen positiven Wert, entsteht ein positives Drehmoment. Ist das Vorzeichen negativ, entsteht ein negatives Drehmoment. Dies kann zur Bewertung von Zündmöglichkeiten genutzt werden.

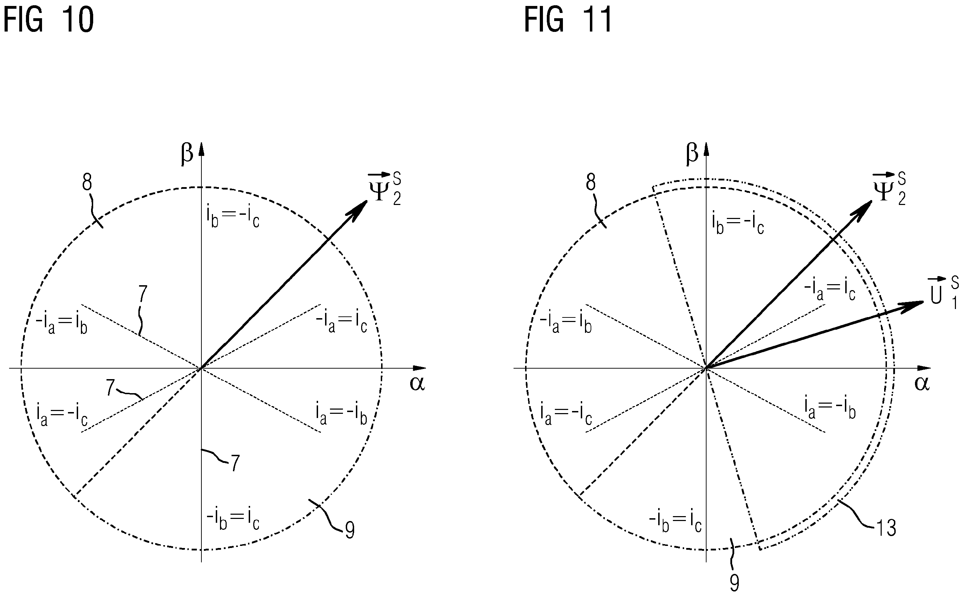

Zur weiteren Herleitung wird nun vereinfachend angenommen, dass ein Rotorfluss $\Psi_2$ mit einer so großen d-Komponente $\Psi_{2a}$ vorliegt, dass ein Drehmoment entsteht (siehe Gleichung 5), welches den Motor in eine messbare Drehbewegung versetzen kann, dass sich der Rotor aber nicht dreht. Außerdem ist bekannt, wie die Bahnen 7 der prinzipiell möglichen zweiphasigen Zündungen im $\alpha$-$\beta$-Koordinatensystem verlaufen. Daher kann genau bestimmt werden, mit welcher Zündung positives Drehmoment erzeugt werden kann, siehe den gestrichelt umrandeten Halbraum 8 in FIG 10, und mit welcher Zündung negatives Drehmoment erzeugt werden kann, siehe den strichpunktiertumrandeten Halbraum 9 in FIG 10.

Es ist allerdings so, dass das Netz in der Raumzeigerdarstellung durch einen Spannungszeiger beschrieben wird, der mit der Netzspannungs-Kreisfrequenz umläuft. Somit sind nicht alle Zündmöglichkeiten umsetzbar, sondern nur jene, die im theoretisch möglichen Bereich liegen, welcher in der Raumzeigerdarstellung der Halbraum von +90° bis -90° um den Spannungszeiger ist. Zur Veranschaulichung siehe FIG 11: darin ist das Raumzeigerdiagramm von FIG 10 um einen beispielhaften Spannungszeiger $\vec{U}_1^S$ und einen Bereich 13, in der die möglichen Zündungen liegen, ergänzt. In FIG 11 ist im Vergleich zu FIG 10 der Bereich 13 hinzugekommen, in dem diejenigen Zündkonstellationen (Bahnen) liegen, die aufgrund der Netzlage möglich sind.

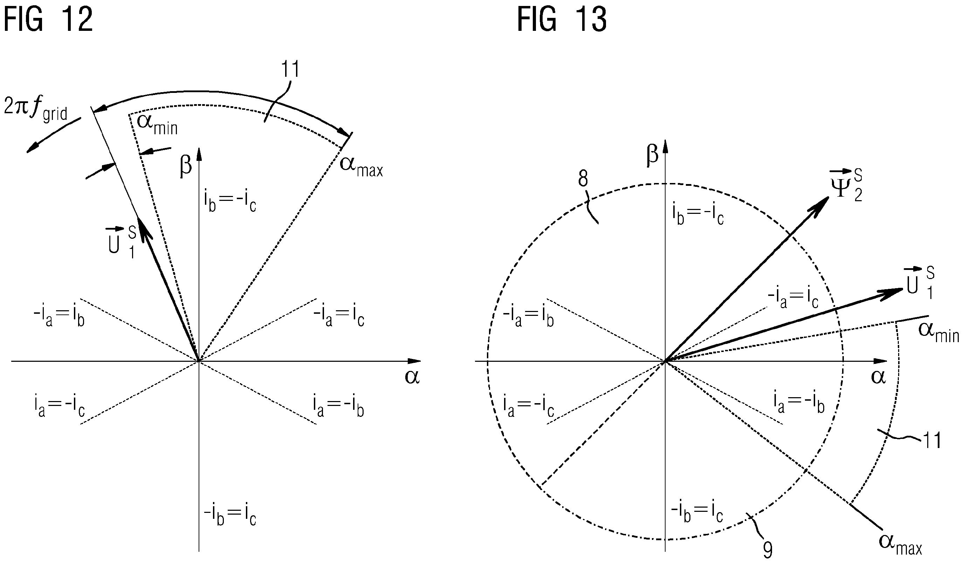

Durch die Einbeziehung des Spannungszeigers $\vec{U}_1^S$ sind nun alle die Zündmöglichkeiten aufgezeigt, die physikalisch zu diesem Zeitpunkt möglich sind, d.h. diejenigen Zündmöglichkeiten, die im Bereich 13 liegen. Allerdings ist damit nicht klar, wie groß die maximale Amplitude des entstehenden Stroms wird. Um hier ein Beschränkungsmaß für den maximalen Strom zu definieren, wird auf eine Definition, die der des Zündwinkels $\alpha$ im herkömmlichen Verfahren nahekommt, zurückgegriffen. Statt aber wie im herkömmlichen Verfahren einen festen Zündwinkel $\alpha$ zu definieren, wird

nun, wie bereits im Zusammenhang mit FIG 8 erläutert, der Zündwinkelbereich 11 mit einem Mindestzündwinkel $\alpha_{min}$ und ein Maximalzündwinkel $\alpha_{max}$ festgelegt, die sich in einer festen Winkelbeziehung zu dem Spannungszeiger $\vec{U}_1^S$ befinden und mit ihm mit der Winkelgeschwindigkeit $\omega_U = 2\pi f_{grid}$, welche direkt proportional zur Netzfrequenz $f_{grid}$ ist, rotieren, siehe FIG 12. Zur Veranschaulichung: In FIG 12 wären die Zündmöglichkeiten diejenigen, deren Bahnen im Zündwinkelbereich 11 liegen, d. h. einzig die Zündung, die der Bahn $i_b = -i_c$ entspricht, d. h. die Zündung der Phasen b und c.

Nachdem der Bereich der erlaubten Zündungen auf den Zündwinkelbereich 11, begrenzt durch die Mindest- und Maximalzündwinkel $\alpha_{min}$ und $\alpha_{max}$, eingeschränkt wurde, soll auch der Drehmomentbereich eingeschränkt werden. Falls es das Ziel ist, den Motor zu beschleunigen, sind alle Zündmöglichkeiten im ersten Bereich 8 attraktiv, weil sie ein positives Drehmoment erzeugen, und alle Möglichkeiten im zweiten Bereich 9 unattraktiv, weil sie ein negatives Drehmoment erzeugen.

Neben dem Kriterium des Drehmoments muss beim Betrieb der Drehstrommaschine auch sichergestellt sein, dass nach einer Zündung noch ausreichend Fluss im Motor vorhanden ist. Würde z. B. eine Zündung für einen Strom-vektor entlang der Bahn $i_a = -i_c$ in FIG 11 erfolgen, würde positives Drehmoment erzeugt, da sich diese Zündung in dem Halbraum 8, in dem positives Drehmoment $+M_M$ erzeugt werden kann, befindet. Allerdings wäre der entlang der Bahn $i_a = -i_c$ pulsierende Stromzeiger $\vec{I}_1^S$ weitgehend entgegengesetzt zu dem Flusszeiger $\vec{\psi}_2^S$ orientiert und würde daher zu einem deutlichen Flussabbau im Rotor führen. Diese Betrachtung basiert vereinfachend auf einer einzigen spezifischen Zündung; tatsächlich ist es die Überlagerung mehrerer Einzelzündungen, die statistisch zu einem Flussabbau führt.

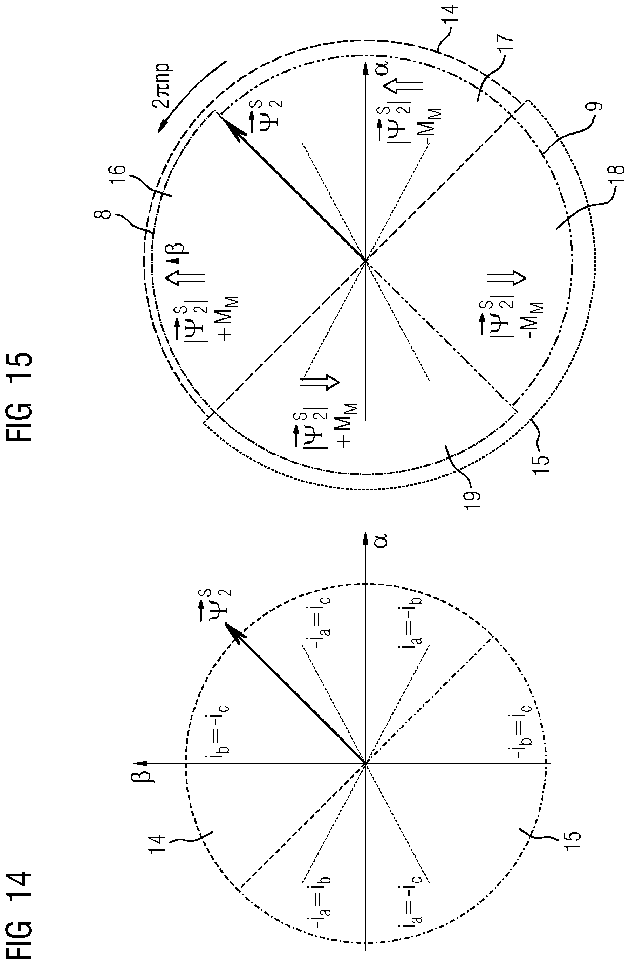

FIG 14 zeigt, unter Vernachlässigung von Rotorwiderstand R2 und Eisenverlusten, wo Fluss aufgebaut und wo er abgebaut würde: es existiert ein gestrichelt umrahmter Bereich 14, in dem diejenigen Zündmöglichkeiten liegen, die die Rotorflussverkettung stärken, sowie ein strichpunktiert umrahmter Bereich 15, in dem diejenigen Zündmöglichkeiten liegen, die die Rotorflussverkettung schwächen.

FIG 15 fasst die Informationen von FIG 10 und FIG 14 in einer Darstellung zusammen: die Bereiche 8 und 9, in denen positives Drehmoment $+M_M$ bzw. negatives Drehmoment $-M_M$ erzeugt wird, und die Bereiche 14 und 15, in denen Fluss aufgebaut $\vec{\psi}_2^S \Uparrow$ bzw. Fluss abgebaut $\vec{\psi}_2^S \Downarrow$ wird, überlappen sich gegenseitig und führen zu den dargestellten vier unterschiedlichen Sektoren 16 bis 19. Die in FIG 15 eingezeichneten Bereiche 8, 9, 14, 15, 16, 17, 18 und 19 befinden sich in einer festen Winkelbeziehung zu dem Rotorflusszeiger $\vec{\psi}_2^S$ und rotieren mit ihm mit der Winkelgeschwindigkeit $\omega_\psi = 2\pi np$, welche zur mechanischen Rotordrehzahl n und zur Polpaarzahl p des Drehstrommotors direkt proportional ist.

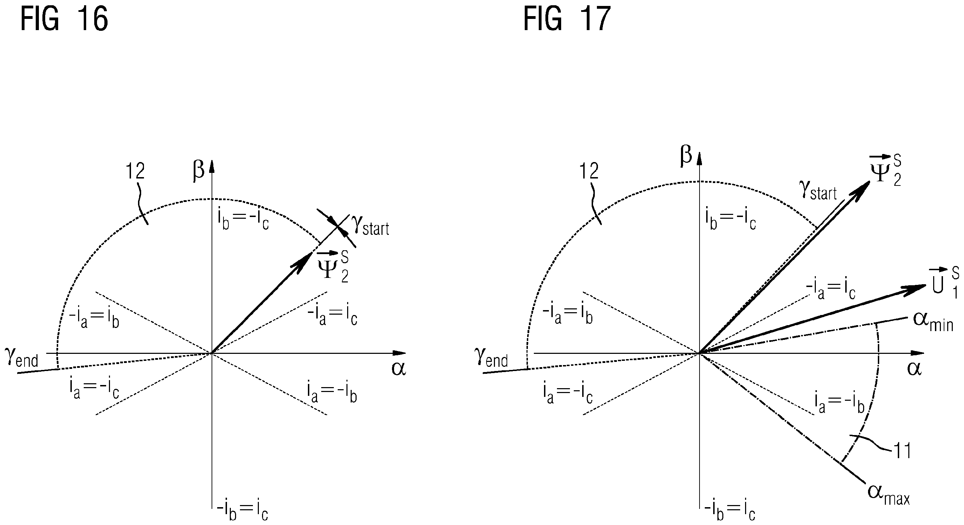

Falls eine Beschleunigung des Motors das Ziel des Sanftstarters ist, sollten die gewählten Stromzeiger in den Sektoren mit positivem Drehmoment, d. h. in den Sektoren 16 und 19 liegen. Wegen der ständigen Rotorflussabnahme aufgrund des Rotorwiderstands $R_2$ ist es nützlich, wenn durch die Zündungen im Mittel mehr Fluss erzeugt wird als verloren geht. FIG 16 zeigt einen Fluss- und Drehmomentwinkelbereich 12, auch vereinfachend als Flussfenster bezeichnet, das dieses Verhalten berücksichtigt: der Fluss- und Drehmomentwinkelbereich 12, der sich auf den Rotor-flusszeiger $\vec{\psi}_2^S$ bezieht, wird durch die Winkel $\gamma_{start}$ und $\gamma_{end}$ begrenzt, die vom Rotorflusszeiger $\vec{\psi}_2^S$ aus gemessen werden. Der Fluss- und Drehmomentwinkelbereich 12 wurde auf Basis der Zusammenhänge in FIG 15, zusammen mit der Vorgabe, dass durch die Zündungen statistisch gesehen im Mittel mehr Fluss erzeugt werden soll als verloren geht, beispielhaft festgelegt.

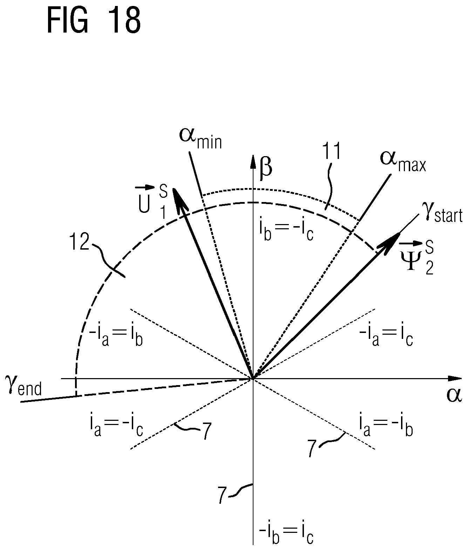

Der nun definierte Fluss- und Drehmomentwinkelbereich 12 schließt also Sektoren mit positivem Drehmoment und Sektoren mit Flussaufbau bzw. nur geringem Flussabbau ein. Nun sollen die beiden definierten Bereiche, der Zündwinkelbereich 11 und der Fluss- und Drehmomentwinkelbereich 12, zu einem Entscheidungskriterium zusammengefasst werden. Liegt also eine Zündmöglichkeit 7 sowohl innerhalb des Zündwinkelbereich 11 als auch innerhalb des Fluss- und Drehmomentwinkelbereichs 12, sollte diese Zündung ausgeführt werden. In dem in FIG 17 gezeigten Beispiel ist dies für keine der Zündmöglichkeiten der Fall; demnach sollte keine Zündung ausgeführt werden. Nun kann eine gewisse Zeit gewartet werden, in der sich der Spannungszeiger $\vec{U}_1^S$ weiterdreht. Beispielsweise ca. 5 ms später, was bei einer 50 Hz-Wechselspannung mit einer Kreisfrequenz von $\omega = 2\pi / (20\text{ ms})$ einer 90°-Rotation im Raumzeigerdiagramm entspricht, sieht die Konstellation aus wie in FIG 18: Der Spannungszeiger $\vec{U}_1^S$ hat sich um 90° weitergedreht,

der Rotorflusszeiger $\vec{\Psi}_2^S$ dagegen blieb konstant in seiner Amplitude und Richtung (Motor steht still, keine Eisen- und Rotorverluste). Jetzt liegt die Bahn 7 der Zündkombination b&c sowohl im Sektor 11 als auch im Sektor 12. Also kann diese Zündkombination b&c ausgeführt werden, um positives Drehmoment $+M_M$ zu erzeugen, den Rotorfluss $\Psi_2^S$ etwas zu vergrößern und eine maximale Stromamplitude nicht zu überschreiten.

Das hier dargestellte Verfahren kann nun mit fester Schrittweite immer wieder ausgeführt werden. Immer dann, wenn eine der Zündkombinationen a&b, b&c, c&a innerhalb der beiden Sektoren 11 und 12 liegt, wird diese gezündet. Somit reicht eine einfache Kriterienüberprüfung, um die Ansteuerimpulse zu generieren.

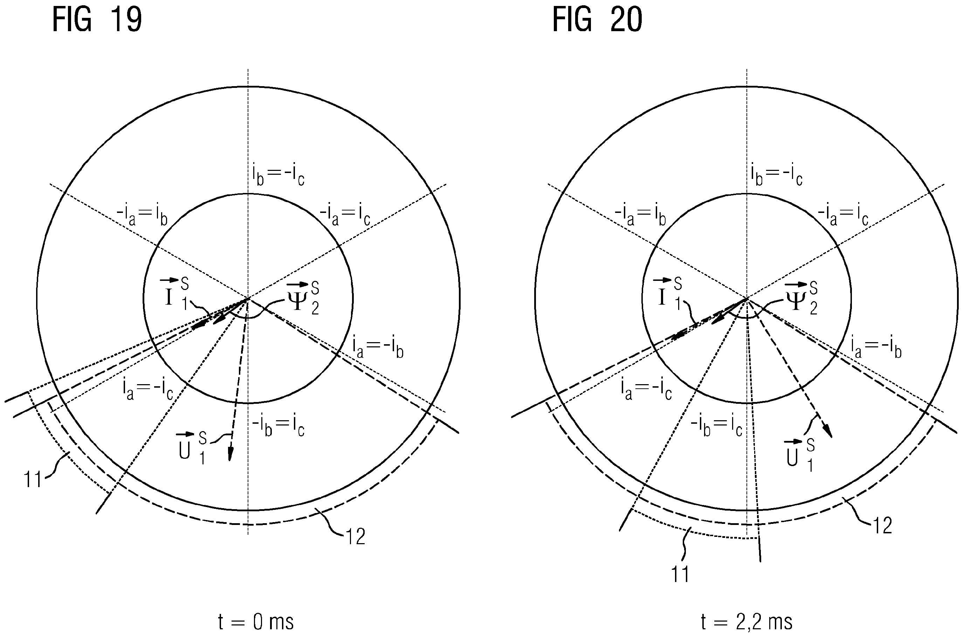

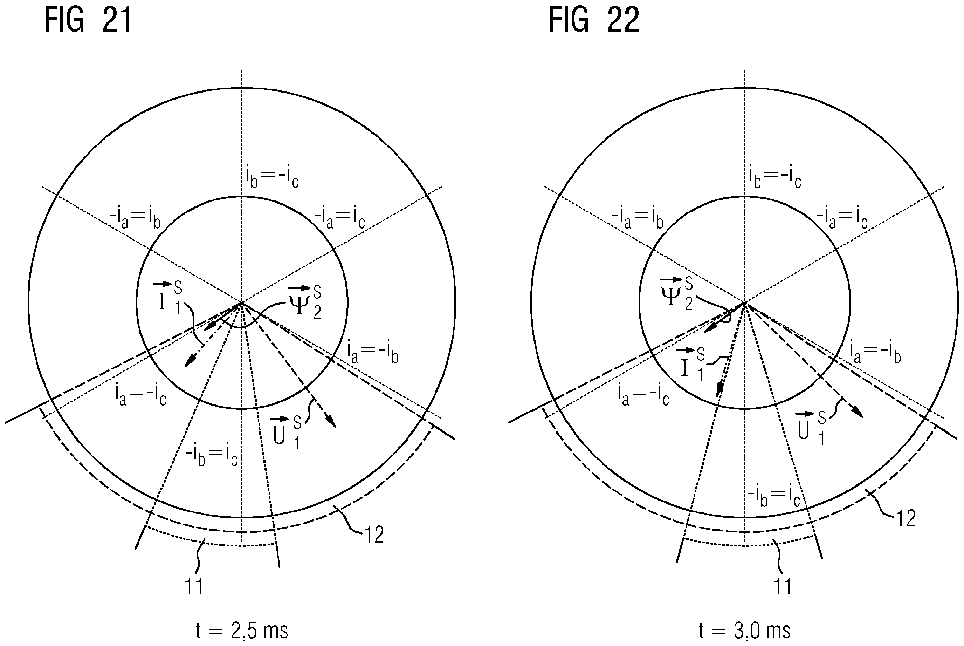

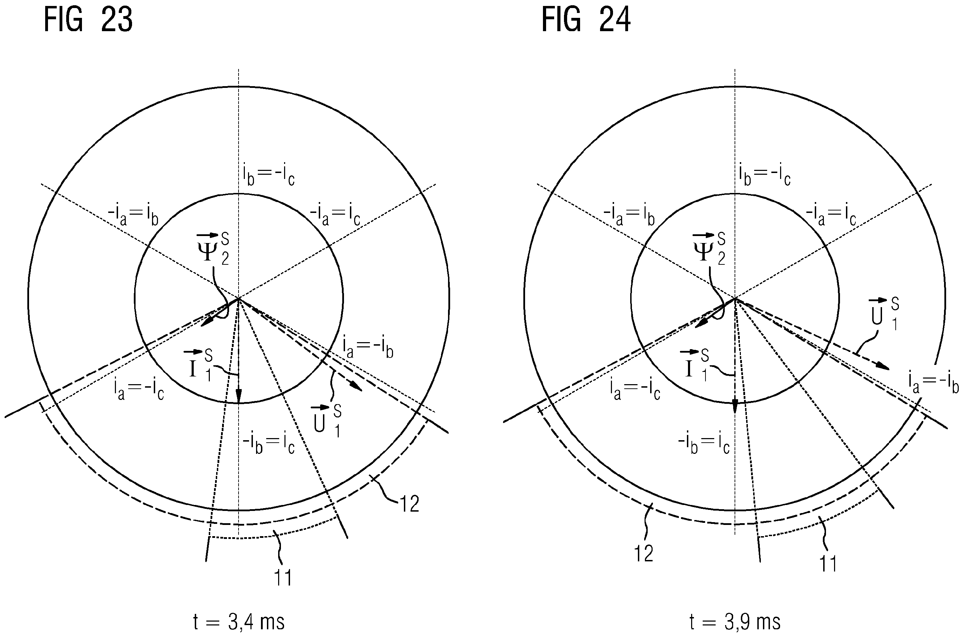

Wenn eine Zündung erfolgt ist, kann es passieren, dass sich, noch während Strom fließt, eine weitere Zündmöglichkeit, an der das dritte, noch sperrende Thyristorpaar beteiligt ist, ergibt. In diesem Fall würde auch diese Zündung unmittelbar ausgeführt. Dementsprechend kommt es zu einer dreiphasigen Zündung a&b&c, welche, im Gegensatz zu den zweiphasigen Zündungen, einen rotierenden Stromzeiger $\vec{I}_1^S$ ergibt. Diese Situation einer 3-phasigen Zündung ist in den FIG 19 bis 24 illustriert. FIG 23 bei t = 3,4 ms und FIG 24 bei t = 3,9 ms zeigen, dass, wenn der Stromzeiger $\vec{I}_1^S$ die nächste Zündmöglichkeit in der Bewegung passiert, er dann auf dieser Position "einrastet". Betrachtet man die zugehörigen Phasenströme, ist dies der Punkt, an dem der der Thyristor in einer der Phasen aufgrund eines Stromnulldurchgangs sperrt.

Drehender Motor

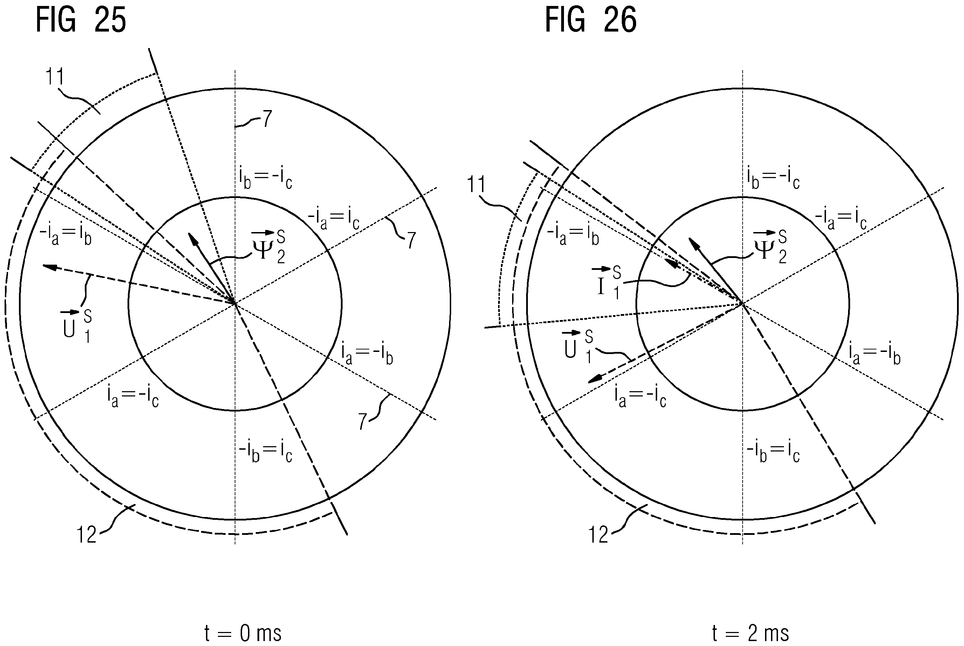

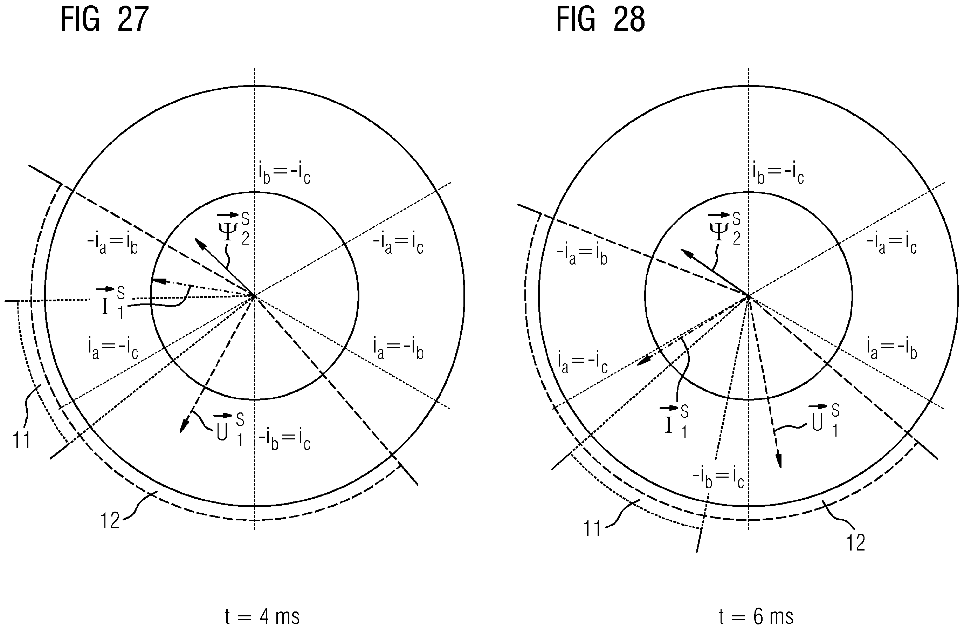

Allen bisher gemachten Betrachtungen liegt die vereinfachende Annahme zugrunde, dass der Rotor stillsteht. Allerdings ist diese Annahme nach den ersten Zündungen nicht mehr haltbar, sobald sich der Rotor in Bewegung gesetzt hat. Daher muss nun die Drehzahl des Motors in den Überlegungen Berücksichtigung finden. Die festen Bahnen 7 des Stromzeigers, siehe das $\alpha$-$\beta$-Diagramm in FIG 5, sind unbeeinflusst durch die Drehzahl, da sie allein vom Stator abhängig sind, welcher nicht rotiert. Auch die grundsätzlichen Zusammenhänge der Zündwinkel ändern sich nicht. Allerdings ändert sich während des Stromflusses in der Raumzeigerdarstellung die Lage der Rotorflusszeigers $\vec{\Psi}_2^S$ und des Statorstromzeigers $\vec{I}_1^S$. Genauer: Es verändert sich nicht nur die Lage der Raumzeiger $\vec{\Psi}_2^S$ und $\vec{I}_1^S$, sondern es ändert sich auch die Winkellage dieser beiden Raumzeiger zueinander. Diese Abweichung führt zu einer Abweichung in der Bewertung des zu erwartenden Drehmoments und des Einflusses auf den Rotorfluss. Diese werden in FIG 25 bis 28 beispielhaft illustriert.

Figs. 25 bis 28 gelten für eine Zündung für einen mit einer mechanischen Drehzahl von n = 250 min$^{-1}$ (Nenndrehzahl 1470 min$^{-1}$) rotierenden Rotor. Der Spannungszeiger $\vec{U}_1^S$ rotiert mit einer zur Netzfrequenz $f_{grid}$ direkt proportionalen Winkelgeschwindigkeit $\omega_U = 2\pi f_{grid}$, der Flusszeiger $\vec{\Psi}_2^S$ mit einer zur Polpaarzahl p und zur mechanischen Rotordrehzahl n direkt proportionalen Winkelgeschwindigkeit $\omega_\psi = 2\pi n p$, wobei diese beiden Winkelgeschwindigkeiten nicht übereinstimmen; dagegen zeigen die Stromzeigerachsen 7, die sogenannten Bahnen, für 2-phasige Zündungen in feste Richtungen. In Figs. 25 bis 28 ist sichtbar, dass sich aufgrund der Rotation des Rotors neben dem Spannungszeiger $\vec{U}_1^S$ auch der Flusszeiger $\vec{\Psi}_2^S$ dreht. Entsprechend gilt der feste Bezug zwischen dem Stromzeiger $\vec{I}_1^S$ zum Anfang der Zündung nicht mehr über die ganze Zeit des Stromflusses, sondern verändert sich über die Zeit. Dies führt dazu, dass die Überlegungen zu positivem Drehmoment und Rotorflussentwicklung auf einer anderen Basis getroffen werden, als sie tatsächlich während der Zündung ablaufen. Um diesen Effekt zu kompensieren, wird der ursprünglich festgelegte Bereich für mögliche Zündungen um einen Verdrehwinkel $\delta_{rot}$ verdreht. Diese Verdrehung bezweckt, die Abweichung durch den rotierenden Rotor bestmöglich zu kompensieren.

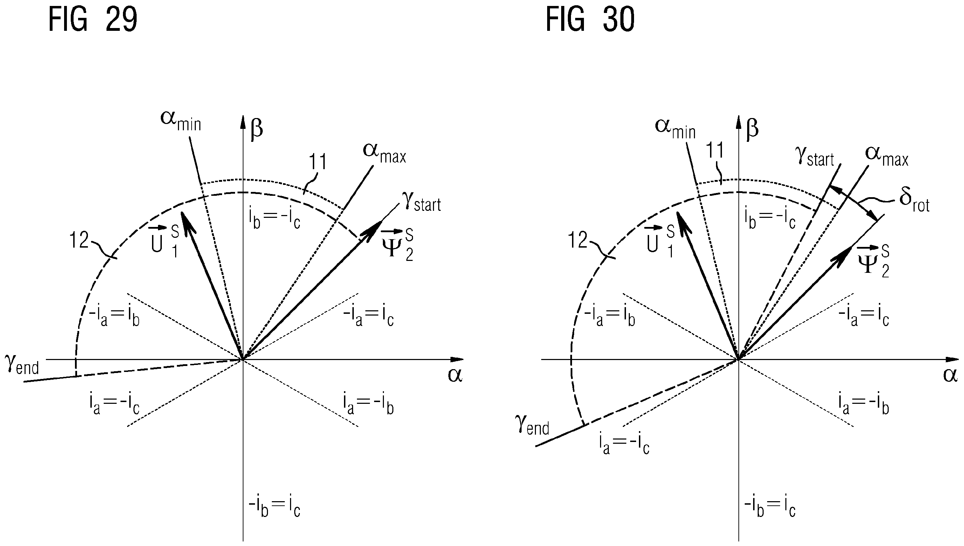

Eine Bestimmung des Verdrehwinkels $\delta_{rot}$ könnte wie folgt aussehen, wobei auch andere systematische Bestimmungen denkbar sind: unter der Annahme, dass die Bedingungen in der zeitlichen Mitte eines Strompulses ungefähr den Mittelwert der Verhältnisse über den gesamten Strompuls darstellen, kann dieser als Referenz herangezogen werden. Jetzt legt man den letzten Strompuls zugrunde und bestimmt hier das Zeitintervall $t_{delay}$ zwischen dem Zündzeitpunkt und dem Strommaximum, wie in FIG 30 veranschaulicht. Nun kann mit guter Näherung davon ausgegangen werden, dass das Zeitintervall $t_{delay}$ in dem nun zu bewertenden Fall identisch zu dem des vorherigen Zündimpulses ist. Anders formuliert: Wenn beim vorherigen Zündimpuls das Zeitintervall zwischen Zündung und Strommaximum gleich

$t_{delay}$ ist, wird es wohl beim nächsten Zündimpuls sehr ähnlich bzw. identisch sein. Entsprechend kann der Fluss- und Drehmomentwinkelbereich 12 um einen dem Zeitintervall $t_{delay}$ entsprechenden Verdrehwinkel $\delta_{rot}$ vorgedreht werden, wie in FIG 30 gezeigt, um den Einfluss des rotierenden Rotors auf die Zündentscheidung zu minimieren.

Mit der folgenden Gleichung (6) kann der Verdrehwinkel $\delta_{rot}$ bei diesem Ansatz bestimmt werden, wobei $\Omega_L$ die Rotordrehzahl ist:

$$\delta_{rot} = 2\pi \left( \frac{t_{delay}}{1/\Omega_L} \right) = 2\pi\,\Omega_L\,t_{delay} \qquad (6)$$

Wird der Verdrehwinkel $\delta_{rot}$ auf die beschriebene Art bestimmt, kann ein Großteil der durch den rotierenden Rotor auftretenden Änderungen kompensiert werden.

Beeinflussung des Verhaltens durch die Beeinflussung der Lage der Schaltgrenzen

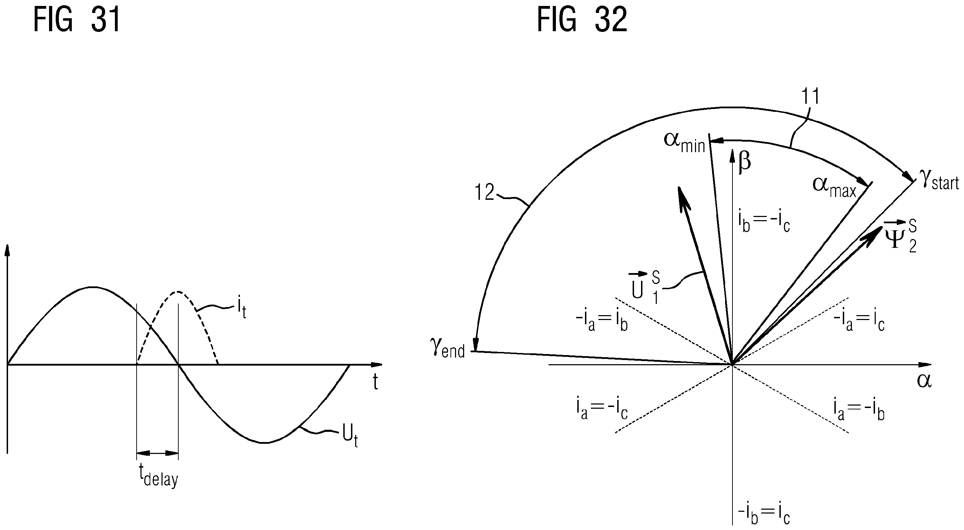

Bisher wurde die Festlegung für die zwei Zündbereiche sehr vage und mit prinzipiellen Überlegungen begründet, um den grundlegenden Gedankengang zu erläutern. In der konkreten Anwendung hingegen braucht es eine Systematik, diese Werte so festzulegen, dass das reale Betriebsverhalten möglichst mit dem gewünschten Betriebsverhalten übereinstimmt. Dafür müssen die Grenzen systematisch bestimmt werden. In FIG 32 sind die Grenzen $\alpha_{min}$, $\alpha_{max}$, $\gamma_{start}$, $\gamma_{end}$ dargestellt, deren Einfluss auf das Verfahren im Folgenden systematisch erläutert wird.

Obere Zündwinkelbereichsgrenze $\alpha_{max}$:

Diese Grenze ist von entscheidender Bedeutung; sie definiert indirekt den kürzesten Stromfluss durch eine Zündung. Dieser Winkel $\alpha_{max}$ sollte so gewählt werden, dass auch bei einem Netz, in dem die Nulldurchgangsbestimmung schwierig ist (hohe Oberwellenbelastung oder Verzerrungen im Bereich vor und nach dem Nulldurchgang), sichergestellt ist, dass die Zündung sich immer so verhält, dass der Strom in die gewollte Richtung fließt und es nicht zu einer ungewollten Zündung mit viel zu hoher Stromamplitude kommt.

Untere Zündwinkelbereichsgrenze $\alpha_{min}$:

Diese Grenze bestimmt die Zündung, bei der der Stromfluss die maximale Länge und größte Amplitude erreicht. Dieser Winkel $\alpha_{min}$ kann analog zum Zündwinkel $\alpha$ bei den klassischen Ansteuerverfahren z. B. über eine Kennlinie vorgegeben werden oder unter Berücksichtigung der Stromamplitude geregelt werden.

Auch eine Berücksichtigung der aktuellen Flussamplitude zur Begrenzung des maximal möglichen Drehmoments ist denkbar. Da mittels des Winkels $\alpha_{min}$ der Strom und das Drehmoment gesteuert werden kann, ist die Funktion dieses Winkels ähnlich zu der des Zündwinkels $\alpha$ in herkömmlichen Ansteuerverfahren. $\alpha_{min}$ kann einen Wert aus dem folgenden Definitionsbereich annehmen: [-90°, $a_{max}$], gemessen in Bezug auf den Spannungszeiger $\vec{U}_1^S$.

Grenze zum negativen Drehmoment $\gamma_{start}$:

Diese Grenze bestimmt die Abgrenzung zum negativen Drehmoment. Je nach Wahl des Winkels $\gamma_{start}$ wird z. B. ein leicht negatives Drehmoment zugelassen, zugunsten eines stark flussbildenen Stroms.

Flussregelgrenze $\gamma_{end}$:

Dieser Winkel $\gamma_{end}$ bestimmt, wie lange die Zündungen weiter fortgeführt werden, um positives Drehmoment $+M_M$ zu generieren. Je nachdem wie diese Grenze festgelegt wird, wird entweder lange gezündet und dadurch die Rotorflussverkettung reduziert oder nur gezündet, falls es im Mittel zu keinem Abbau der Rotorflussverkettung kommt. Mit der Festlegung des Winkels $\gamma_{end}$ wird also aktiv bestimmt, wieviel Rotorflussverkettung im Rotor bestehen bleibt und bei der nächsten Zündphase vorhanden ist. Dieser Parameter kann zur "Flussführung" oder "Flussregelung" während des Hochlaufs genutzt werden. Mittels des Winkels $\gamma_{end}$ kann also der mittlere absolute Rotorfluss $|\vec{\Psi}_2^S|$ beeinflusst werden. Falls der Motor beschleunigt werden soll, kann die Differenz $\gamma_{end}$ - $\gamma_{start}$ einen Wert aus dem folgenden Definitionsbereich annehmen: [90°, 180°], gemessen in Bezug auf den Flusszeiger $\vec{\psi}_2^S$.

Exemplarische Regelstruktur zur Beeinflussung der Schaltgrenzen

Wie bereits im vorhergehenden Abschnitt "Beeinflussung des Verhaltens durch die Beeinflussung der Lage der Schaltgrenzen" erläutert, können die Winkel $\alpha_{min}$, $\alpha_{max}$, $\gamma_{start}$, $\gamma_{end}$, die die Zündfenster bzw. Flussfenster begrenzen, zur Beeinflussung des Hochlaufs genutzt werden.

Mit der Erfindung ist auch ein geregelter Betrieb möglich ist. Die bisher erfolgte Darstellung der obigen Zusammenhänge geht davon aus, dass eine Beschleunigung der Rotorwelle das Ziel ist; hierfür ist die Erzeugung von positivem Drehmoment erforderlich. Die gleichen Argumentationen lassen sich auch auf den Bremsfall überführen, nur dass hier das Fenster der möglichen Zündungen im Bereich für negative Drehmomente angeordnet wird.

Übergang zwischen Verfahren - Kombination mit herkömmlichen Verfahren

Das hier vorgestellte Verfahren bietet gegenüber herkömmlichen, nur auf einem Zündwinkel $\alpha$ basierten Ansteuerverfahren Vorteile, aber vermutlich auch einige Nachteile. Daher kann die Erfindung, alternativ zu einer ausschließlichen Verwendung zur Bestimmung von Ansteuersignalen, auch als eine Ergänzung zu den vorhandenen Verfahren verwendet werden. Es ist möglich, dass das vorliegende Verfahren für bestimmte Drehzahlbereiche besser als für andere geeignet ist. Es ist dementsprechend auch möglich, dass während eines Hochlaufs das hier vorgestellte neue Verfahren und ein bekanntes Verfahren kombiniert werden. In einer bevorzugten Ausgestaltung könnte der Start zunächst mit dem neuen Verfahren beginnen; anschließend wird während des Hochlaufs anhand eines Qualitätskriteriums, z. B. der Drehzahl, entschieden, dass auf eine herkömmliche Ansteuerung umgeschaltet wird, um die Vorteile beider Verfahren zu kombinieren.

Rotorfluss als Grundlage

Grundlage aller gemachten Bewertungen ist die Verwendung des verketten Rotorflusses $\vec{\psi}_2^S$. Im Gegensatz zum Statorstrom kann der verkette Rotorfluss $\vec{\psi}_2^S$ jedoch im industriellen Umfeld nicht direkt über entsprechende Sensorik gemessen werden. Die einfachste Möglichkeit, die Rotorflussverkettung zu ermitteln, ist die Verwendung des bereits oben einführten Modellierung (vgl. Gleichung (16) in Nannen et al.):

$$\frac{d\vec{\Psi}_2^S}{dt} \; = \; \frac{R_2 \cdot L_h}{L_2} \cdot \vec{I}_1^S - \frac{R_2}{L_2} \cdot \vec{\Psi}_2^S + j \cdot \Omega_L \cdot \vec{\Psi}_2^S \tag{8}$$

Hierfür werden der Statorstrom $\vec{I}_1^S$ und die Rotordrehzahl $\Omega_L$ benötigt. Der Statorstrom Is kann einfach gemessen werden: die zwei oder drei Phasenströme werden gemessen, anschließend wird mittels Clarke-Transformation der Stromvektor $\vec{I}_1^S$ berechnet. Die mechanische Drehzahl kann grundsätzlich auch über eine geeignete Messtechnik erfasst werden. Allerdings ist dies beim Einsatz von Sanftstartern im industriellen Umfeld untypisch, da die Kosten und der Aufwand für die Installation einen Einsatz von Sanftstartern unwirtschaftlich machen. Dementsprechend erscheint eine Ermittlung der Drehzahl ohne zusätzlichen Sensor sehr vorteilhaft. Für die Ermittlung der Drehzahl auf Modellbasis gibt es eine Vielzahl von Möglichkeiten, die im Hinblick auf die sensorlose Regelung von Drehstrommaschinen in den letzten Jahrzehnten entwickelt wurden. Eine Übersicht darüber bietet folgende Monographie: Vas, Peter: Sensorless Vector and Direct Torque Control. Monographs in Electrical and Electronic Engineering, Volume 42. Oxford: Oxford University Press 1998, ISBN-13: 978-0198564652. Auch eine alternative Modellierung des Rotorflusses ist möglich.

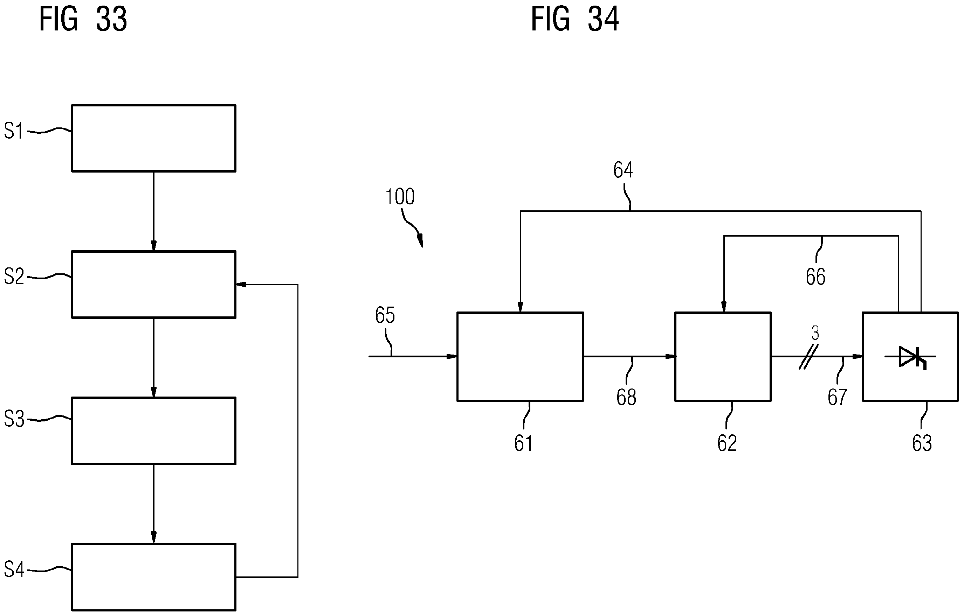

FIG 33 zeigt ein Ablaufdiagramm gemäß einer Ausführungsform des erfindungsgemäßen Verfahrens. In einem ersten Schritt S1 wird das netzbezogene Zündkriterium und das rotorbezogene Zündkriterium definiert. Das netzbezogene Zündkriterium ist erfüllt, wenn eine Zündmöglichkeit innerhalb des Zündwinkelbereichs 11 liegt, der eine untere Zündwinkelbereichsgrenze $\alpha_{min}$ und eine obere Zündwinkelbereichsgrenze $\alpha_{max}$ in Bezug auf den Spannungszeiger $\vec{U}_1^S$. Das rotorbezogene Zündkriterium ist erfüllt, wenn eine Zündmöglichkeit innerhalb des Fluss- und Drehmomentwinkelbereichs 12 liegt, dessen Bereichsgrenzwerte $\gamma_{start}$ und $\gamma_{end}$ in Bezug auf den Rotorfluss definiert sind. Im ersten Schritt S1 werden außerdem Zündungen von Thyristoren vorgenommen, um den Rotor in Drehung zu versetzen, so dass der Rotorfluss ungleich Null ist.

In einem dem ersten Schritt S1 nachfolgenden zweiten Schritt S2 wird geprüft, ob das netzbezogene Zündkriterium erfüllt ist. Das netzbezogene Zündkriterium ist erfüllt, wenn eine Zündmöglichkeit von zwei oder mehr Netzphasen a, b, c innerhalb des Zündwinkelbereichs 11 liegt.

In einem dem zweiten Schritt S2 nachfolgenden dritten Schritt S3 wird geprüft, ob das rotorflussbezogene Zündkriterium erfüllt ist. Das rotorflussbezogene Zündkriterium ist erfüllt, wenn eine Zündmöglichkeit von zwei oder mehr Netzphasen a, b, c innerhalb des des Fluss- und Drehmomentwinkelbereichs 12 liegt.

In einem dem dritten Schritt S3 nachfolgenden vierten Schritt S4 erfolgt anlässlich einer Zündmöglichkeit von zwei oder mehr Netzphasen a, b, c eine Zündung der entsprechenden Thyristoren, falls sowohl das netzbezogene Zündkriterium als auch das rotorflussbezogene Zündkriterium erfüllt ist. Nach der vierten Schritt S4 wird zurück zum zweiten Schritt S2 gesprungen, von wo der wiederholte Durchlauf der Schritte S2 bis S4 erneut beginnt.

Sanftstartertopologie

Basis für alle gemachten Betrachtungen ist die in FIG 1 gezeigte Topologie. Grundsätzlich ist auch für jede andere thyristorbasierte Topologie eine Anwendung des Verfahrens denkbar.

Eine mögliche Struktur zur Generierung von Ansteuerimpulsen gemäß der vorliegenden Erfindung ist in FIG 34 gezeigt: In einem ersten Block des Sanftstarters 100 empfängt eine Steuerungseinheit 61 Sollwerte 65, z.B. ein gewünschtes Motordrehmoment, einen maximalen Sollstrom oder eine Drehzahlrampe, und Messwerte 64, z. B. Statorstrom $I_1$, Statorspannung $U_1$, Drehmoment M und/oder Rotordrehzahl n des Motors. Auf der Grundlage der empfangenen Sollwerte 65 und der empfangenen Messwerte 64 stellt die Steuerungseinheit 61 ein oder mehrere der Stellwerte 68, d. h. $\alpha_{min}$, $\alpha_{max}$, $\gamma_{start}$, $\gamma_{end}$, so ein, dass die Sollwerte erzielt werden können. Diese Stellwerte 68 werden an einen zweiten Block des Sanftstarters 100 übergegeben, eine Recheneinheit 62, welche einen Prozessor und einer Speichereinheit aufweist. Der Prozessor führt ein in der Speichereinheit abgelegtes Computerprogramm aus, welches einen Algorithmus zur Ausführung des erfindungsgemäßen Verfahrens enthält. Die Recheneinheit 62 generiert aus den erhaltenen Stellwerten 68 Ansteuersignale 67.

Ein dritter Block 63 des Sanftstarters 100 umfasst Thyristoren und Zündvorrichtungen, z.B. eine Zündsignaleinheit. Die von der Recheneinheit 62 empfangenen Ansteuersignale 67 veranlassen die Zündsignaleinheit, Zündsignale für einen bzw. mehrere der Thyristoren zu generieren, so dass der oder die Thyristoren eingeschaltet werden.

**Patentansprüche**

1. Verfahren zum Betreiben eines Drehstrommotors (4) an einem mehrphasigen elektrischen Netz (5) mittels eines Sanftstarters (1), mit dem eine oder mehr Netzphasen (a, b, c) des Netzes (5) jeweils durch Zündung von Thyristoren (2) schaltbar sind,

   wobei neben einem netzbezogenen Zündkriterium ein rotorflussbezogenes Zündkriterium berücksichtigt wird, wobei für eine Zündentscheidung, dass eine Zündmöglichkeit eines oder mehrerer Thyristoren (2) genutzt wird, sowohl das netzbezogene Zündkriterium als auch das rotorflussbezogene Zündkriterium erfüllt sein muss, wobei entweder 2-phasig oder 3-phasig gezündet wird, wobei in einer Raumzeigerdarstellung eine 2-phasige Zündung zu einem Stromvektor führt, der in seiner Ausrichtung fest und in seiner Amplitude pulsierend ist, und eine 3-phasige Zündung zu einem rotierenden Stromvektor führt, **dadurch gekennzeichnet, daß** das netzbezogene Zündkriterium erfüllt ist, wenn in einer Raumzeigerdarstellung der Stromvektor einer Zündmöglichkeit von zwei oder mehr Netzphasen (a, b, c) innerhalb eines Zündwinkelbereichs (11) liegt, der durch eine untere Zündwinkelbereichsgrenze ($\alpha_{min}$) und eine obere Zündwinkelbereichsgrenze ($\alpha_{max}$) in Bezug auf die Netzspannung und/oder den Netzstrom definiert ist, und
   das rotorflussbezogene Zündkriterium erfüllt ist, wenn in einer Raumzeigerdarstellung eine Zündmöglichkeit von zwei oder mehr Netzphasen (a, b, c) innerhalb eines Fluss- und Drehmomentwinkelbereichs (12) liegt, dessen Bereichsgrenzwerte ($\gamma_{start}$; $\gamma_{end}$) in Bezug auf den Rotorfluss definiert sind.

2. Verfahren nach dem vorhergehenden Anspruch, wobei ein Vorliegen eines Zündkriteriums anhand einer Raumzeigerdarstellung von Rotorfluss $(\overrightarrow{\Psi}_2^S)$, Netzspannung $(\vec{U}_1^S)$ und Statorstrom $(\vec{I}_1^S)$ geprüft wird.

**3.** Verfahren nach einem der vorhergehenden Ansprüche, wobei der Fluss- und Drehmomentwinkelbereich (12) um einen Verdrehwinkel ($\delta_{rot}$) verschoben wird, um einen Zeitverzug zwischen einer Zündentscheidung und der Zündung auszugleichen.

**4.** Verfahren nach einem der vorhergehenden Ansprüche, wobei der Drehstrommotor ein Asynchronmotor, Synchronmotor oder PM-Line-Start-Motor ist.

**5.** Verfahren nach einem der vorhergehenden Ansprüche, wobei der Prüfung von netzbezogenen und rotorflussbezogenen Zündkriterien ein Zeitabschnitt des Flussaufbaus vorgelagert ist, in dem durch Zündungen von Thyristoren Rotorfluss erzeugt wird.

**6.** Verfahren nach einem der vorhergehenden Ansprüche, wobei nur Zündmöglichkeiten ermittelt werden, die negative Drehmomente zur Folge haben und damit den Drehstrommotor (4) aktiv bremsen.

**7.** Sanftstarter (100), der geeignet ist, die Schritte eines Verfahrens nach einem der Ansprüche 1 bis 6 auszuführen.

**8.** Computerprogrammprodukt, umfassend Befehle, die bewirken, dass ein Sanftstarter (100) gemäß Anspruch 7 die Verfahrensschritte nach einem der Ansprüche 1 bis 6 ausführt.

**9.** Computerlesbares Medium, auf dem ein Computerprogrammprodukt nach Anspruch 8 gespeichert ist.


**Claims**

**1.** Method for operating a three-phase cage motor (4) on a multiphase electrical grid (5) by means of a soft starter (1), with which one or more grid phases (a, b, c) of the grid (5) can respectively be switched by firing thyristors (2),

   wherein, apart from a grid-related firing criterion, a rotor-flux-related firing criterion is taken into account,
   wherein both the grid-related firing criterion and the rotor-flux-related firing criterion must be satisfied for a firing decision that a firing possibility of one or more thyristors (2) is used,
   wherein firing is either on a 2-phase basis or on a 3-phase basis, a 2-phase firing leading to a current vector which is fixed in its alignment and pulsating in its amplitude and a 3-phase firing leading to a rotating current vector in a space vector representation, **characterized in that**
   the grid-related firing criterion is satisfied if in a space vector representation the current vector of a firing possibility of two or more grid phases (a, b, c) lies within a firing angle region (11) which is defined by a lower firing angle region limit ($\alpha_{min}$) and an upper firing angle region limit ($\alpha_{max}$) in relation to the grid voltage and/or the grid current, and
   the rotor-flux-related firing criterion is satisfied if in a space vector representation a firing possibility of two or more grid phases (a, b, c) lies within a flux and torque angle region (12) of which the region limit values ($\gamma_{start}$; $\gamma_{end}$) are defined in relation to the rotor flux.

**2.** Method according to the preceding claim, wherein the existence of a firing criterion is checked on the basis of a space vector representation of rotor flux $(\vec{\Psi}_2^S)$, grid voltage $(\vec{U}_1^S)$ and stator current $(\vec{I}_1^S)$.

**3.** Method according to either of the preceding claims, wherein the flux and torque angle region (12) is displaced by an angle of rotation ($\delta_{rot}$) in order to compensate for a time delay between a firing decision and the firing.

**4.** Method according to one of the preceding claims, wherein the three-phase cage motor is an asynchronous motor, a synchronous motor or a line-start PM motor.

**5.** Method according to one of the preceding claims, wherein the checking of grid-related and rotor-flux-related firing criteria is preceded by a time phase of flux build-up, in which rotor flux is generated by firings of thyristors.

**6.** Method according to one of the preceding claims, wherein only those firing possibilities that result in negative torques, and consequently actively brake the three-phase cage motor (4), are determined.

7. Soft starter (100), which is suitable for carrying out the steps of a method according to one of Claims 1 to 6.

8. Computer program product, comprising commands which have the effect that a soft starter (100) according to Claim 7 performs the method steps according to one of Claims 1 to 6.

9. Computer-readable medium on which a computer program product according to Claim 8 is stored.


**Revendications**

1. Procédé pour faire fonctionner un moteur (4) triphasé sur un réseau (5) électrique polyphasé au moyen d'un démarreur (1) doux, par lequel une ou plusieurs phases (a, b, c) du réseau (5) peuvent être mises en circuit respectivement par amorçage de thyristors (2),

   dans lequel on prend en compte, outre un critère d'amorçage rapporté au réseau, un critère d'amorçage rapporté au flux du rotor,
   dans lequel pour une décision d'amorçage, d'utiliser une possibilité d'amorçage d'un ou de plusieurs thyristors (2), tant le critère d'amorçage rapporté au réseau qu'également le critère d'amorçage rapporté au flux du rotor doivent être satisfaits,
   dans lequel on amorce soit en 2 phases, soit en 3 phases, dans lequel, dans une représentation à vecteur d'espace, un amorçage à 2 phases donne un vecteur de courant, qui est fixe dans sa direction et pulsé dans son amplitude, et un amorçage à 3 phases donne un vecteur de courant tournant, **caractérisé en ce que** le critère d'amorçage rapporté au réseau est satisfait si, dans une représentation en vecteur d'espace, le vecteur de courant d'une possibilité d'amorçage de deux ou plusieurs phases (a, b, c) du réseau se trouve dans une partie (11) angulaire d'amorçage, qui est définie par une limite ($\alpha_{min}$) inférieure de plage angulaire d'amorçage et une limite ($\alpha_{max}$) supérieure de plage angulaire d'amorçage relativement à la tension du réseau et/ou au courant du réseau et
   le critère d'amorçage rapporté au flux du rotor est satisfait si, dans une représentation en vecteur d'espace, une possibilité d'amorçage de deux ou de plusieurs phases (a, b, c) du réseau se trouve à l'intérieur d'une plage (12) angulaire de flux et de couple, dont les valeurs ($\gamma_{start}$ ; $\gamma_{end}$) limites de plage sont définies relativement au flux du rotor.

2. Procédé suivant la revendication précédente, dans lequel on contrôle une présence d'un critère d'amorçage à l'aide d'une représentation en vecteur d'espace de flux ($\overrightarrow{\psi_2^S}$) de rotor, de tension ($\overrightarrow{U_1^S}$) de réseau et de courant ($\overrightarrow{I_1^S}$) de stator.

3. Procédé suivant l'une des revendications précédentes, dans lequel on décale la plage (12) angulaire de flux et de couple d'un angle ($\delta_{rot}$) de rotation, pour compenser un retard dans le temps entre une décision d'amorçage et l'amorçage.

4. Procédé suivant l'une des revendications précédentes, dans lequel le moteur triphasé est un moteur asynchrone, un moteur synchrone ou un moteur PM-Line-Start.

5. Procédé suivant l'une des revendications précédentes, dans lequel on met avant le contrôle de critères d'amorçage relativement au réseau et relativement au flux du rotor un laps de temps d'établissement du flux, dans lequel on produit un flux de rotor par des amorçages de thyristors.

6. Procédé suivant l'une des revendications précédentes, dans lequel on ne détermine que des possibilités d'amorçage, qui ont pour conséquence des couples négatifs et ainsi freinent activement le moteur (4) triphasé.

7. Démarreur (100) doux, qui est propre à effectuer les stades d'un procédé suivant l'une des revendications 1 à 6.

8. Produit de programme d'ordinateur comprenant des instructions, qui font qu'un démarreur (100) doux suivant la revendication 7 effectue les stades de procédé suivant l'une des revendications 1 à 6.

9. Support déchiffrable par ordinateur, sur lequel est mis en mémoire un produit de programme d'ordinateur suivant

la revendication 8.

## FIG 1
Stand der Technik

EP 4 002 676 B1

**FIG 2**
Stand der Technik

**FIG 3**
Stand der Technik

FIG 4

Spannung [ V ]

t [ms]

uA
uB
uC

Strom [ A ]

t [s]

ia
ib
ic

Zeit [ s ]

I
U

12 ms  13 ms  14 ms  15 ms  16 ms  17 ms  18 ms  19 ms  20 ms  21 ms

EP 4 002 676 B1

# FIG 5

EP 4 002 676 B1

FIG 6

FIG 7

FIG 8

FIG 9

EP 4 002 676 B1

FIG 10

FIG 11

EP 4 002 676 B1

FIG 12

$2\pi f_{grid}$

$\alpha_{min}$

11

$\alpha_{max}$

$\beta$

$i_b = -i_c$

$\vec{U}_1^S$

$-i_a = i_b$

$-i_a = i_c$

$\alpha$

$i_a = -i_c$

$i_a = -i_b$

$-i_b = i_c$

FIG 13

$\beta$

8

$\vec{\Psi}_2^S$

$i_b = -i_c$

$-i_a = i_c$

$\vec{U}_1^S$

$-i_a = i_b$

$\alpha_{min}$

$\alpha$

$i_a = -i_c$

$i_a = -i_b$

11

$-i_b = i_c$

9

$\alpha_{max}$

EP 4 002 676 B1

FIG 14

FIG 15

FIG 14

FIG 15

$i_b = -i_c$

$\vec{\Psi}_2^S$

$-i_a = i_b$

$-i_a = i_c$

$i_a = -i_c$

$i_a = -i_b$

$-i_b = i_c$

$2\pi np$

$|\vec{\Psi}_2^S| \Uparrow$
$+M_M$

$|\vec{\Psi}_2^S| \Downarrow$
$+M_M$

$|\vec{\Psi}_2^S| \Uparrow$
$-M_M$

$|\vec{\Psi}_2^S| \Downarrow$
$-M_M$

EP 4 002 676 B1

FIG 16

FIG 17

EP 4 002 676 B1

EP 4 002 676 B1

FIG 18

FIG 19

FIG 20

t = 0 ms

t = 2,2 ms

EP 4 002 676 B1

# FIG 22

$-i_a = i_c$

$i_b = -i_c$

$i_a = -i_b$

$-i_b = i_c$

$-i_a = i_b$

$i_a = -i_c$

$\vec{U}_1^S$

$\vec{\Psi}_2^S$

$\vec{I}_1^S$

12

11

t = 3,0 ms

# FIG 21

$-i_a = i_c$

$i_b = -i_c$

$i_a = -i_b$

$-i_b = i_c$

$-i_a = i_b$

$i_a = -i_c$

$\vec{\Psi}_2^S$

$\vec{U}_1^S$

$\vec{I}_1^S$

12

11

t = 2,5 ms

31

FIG 23       FIG 24

$t = 3{,}4 \text{ ms}$          $t = 3{,}9 \text{ ms}$

EP 4 002 676 B1

FIG 25

FIG 26

EP 4 002 676 B1

t = 0 ms

t = 2 ms

# FIG 27

t = 4 ms

# FIG 28

t = 6 ms

EP 4 002 676 B1

FIG 29

FIG 30

# FIG 31

# FIG 32

EP 4 002 676 B1

# FIG 33

# FIG 34

EP 4 002 676 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3916998 A1
- EP 20176295
- US 2009058341 A1


**In der Beschreibung aufgeführte Nicht-Patentliteratur**

- **NANNEN E.** referenzierten Konferenzpaper Nannen, Hauke; Zatocil, Heiko; Griepentrog, Gerd: Novel predictive start-up algorithm for soft starter driven induction motors. *IECON 2020, 46th Annual Conference of the IEEE Industrial Electronics Society (IES),* 18. Oktober 2020
- Vas, Peter: Sensorless Vector and Direct Torque Control. Monographs in Electrical and Electronic Engineering. Oxford University Press, 1998, vol. 42